(19) Europäisches Patentamt
European Patent Office
Office européen des brevets

(11) **EP 1 898 275 A1**

(12) **EUROPEAN PATENT APPLICATION**
published in accordance with Art. 153(4) EPC

(43) Date of publication:
**12.03.2008 Bulletin 2008/11**

(51) Int Cl.:
***G03H 1/02*** (2006.01)    ***G11B 7/0065*** (2006.01)
***G11B 7/135*** (2006.01)

(21) Application number: **05753333.3**

(22) Date of filing: **27.06.2005**

(86) International application number:
**PCT/JP2005/011755**

(87) International publication number:
**WO 2007/000800 (04.01.2007 Gazette 2007/01)**

(84) Designated Contracting States:
**DE FR**

(71) Applicant: **Fujitsu Ltd.**
**Kawasaki-shi, Kanagawa 211-8588 (JP)**

(72) Inventor: **MORIMOTO, Yasuaki**
**Kanagawa 211-8588 (JP)**

(74) Representative: **Fenlon, Christine Lesley**
**Haseltine Lake**
**5th Floor, Lincoln House**
**300 High Holborn**
**London WC1V 7JH (GB)**

(54) **OPTICAL INFORMATION RECORDING MEDIUM**

(57)    An optical information recording medium (74) includes a recording layer (93) that records information, a reflective layer (95) that reflects a light beam transmitted through the recording layer (93), and a protective layer (94) that is provided between the recording layer (93) and the reflective layer (95) and has thickness set such that an interference pattern formed by interference between the light beam not yet reflected by the reflective layer (95) and the light beam reflected by the reflective layer (95) is formed in the protective layer itself. Thus, when a light beam that changes to recording signal light or reference light is irradiated, information recording noise caused by interference between the irradiated light beam and the light beam reflected by the reflective layer (95) is effectively controlled.

FIG.14

**Description**

TECHNICAL FIELD

The present invention relates to an optical information recording medium for recording information by causing light beams to interfere with each other, and, more particularly to an optical information recording medium for effectively controlling information recording noise caused by interference between irradiated recording signal light or reference light and the recording signal light or the reference light reflected by a reflective layer.

BACKGROUND ART

In recent years, an optical information recording and reproducing technology for recording optical information on a recording medium using a hologram through volumetric recording and reproducing the recorded optical information has been developed. In this optical information recording and reproducing technology, a light beam emitted from a laser beam source is divided into two light beams by amplitude division or wave surface division. One light beam is subjected to light intensity modulation or light phase modulation by a spatial light modulation element to generate recording signal light including information desired to be recorded. The other light beam is used as reference light.

During recording of information, the two light beams interlace or the two light beams are narrowed down using a convergent lens on a coaxial optical path. An interference pattern generated by an interference effect due to diffraction of the two light beams near a focus of the light beams on the recording medium is recorded on the recording medium as optical information. During reproduction of information, the reference light is irradiated on the recording medium and the interference pattern is read, whereby the information is reproduced.

However, there is a disadvantage that, when the light beam emitted from the laser beam source is divided into the two light beams, it is difficult to reduce a size of an apparatus because it is necessary to prepare independent optical systems for the two light beams, respectively, and, when the apparatus is vibrated, optical axes of the two light beams shift and stability of information recording and reproduction falls.

To solve such a problem, an optical storage method is disclosed for forming recording signal light and reference light with a common optical system including a spatial light modulator for recording signal formation and subjecting the recording signal light and the reference light to Fourier transform with a common focusing optical system to record information on a recording medium (see, for example, Patent Document 1).

An optical recording apparatus is disclosed that polarizes and modulates light made incident from a single light source with a spatial light modulator, generates recording signal light and reference light, polarization directions of which are orthogonal to each other, converts polarization states of the recording signal light and the reference light into circularly polarized lights that revolve opposite to each other, and irradiates the recording signal light and the reference light, the polarization states of which are converted into the circularly polarized lights, on a recording medium to thereby record information (see, for example, Patent Document 2).

By using such a technology, the reduction in a size of an apparatus and the improvement of resistance against vibration can be attained. However, a problem in that it is difficult to accurately store information still remains.

Specifically, when a reflective layer is provided in a recording medium, recording signal light made incident on the recording medium is transmitted through a recording layer for recording information in the recording medium and, then, reflected by the reflective layer and transmitted through the recording layer again. Because reflected light of the reflection light is also reflected by the reflective layer, a transmission interference pattern between reflected light of the reference light is formed and noise is recorded in the recording layer.

An optical information recording apparatus is disclosed that shapes, to control the formation of the transmission interference pattern between the reflected lights, the reflected light to be asymmetric around an optical axis of the reflected light (see, for example, Patent Document 3).

Patent Document 1: Japanese Patent Application Laid-Open No. H11-237829
Patent Document 2: Japanese Patent Application Laid-Open No. 2004-311001
Patent Document 3: Japanese Patent Application Laid-Open No. 2004-361928

DISCLOSURE OF INVENTION

PROBLEM TO BE SOLVED BY THE INVENTION

In the conventional technology described above, it is possible to control the transmission interference pattern between the reflected lights of the reference light from being formed. However, there is a problem in that a reflection interference pattern is formed between the recording signal light reflected by the reflective layer and the reference light irradiated on the recording layer or between the recording signal light irradiated on the recording layer and the reference light reflected by the reflective layer, multiple recording is caused by the reflection interference pattern, and complicated noise occurs.

To control the formation of such a reflection interference pattern, it is insufficient to merely shape the reference light to be asymmetric. It is necessary to take into account interference of between both the light beams of the reference light and the recording signal light.

Therefore, it is an important issue how effectively it is possible to control, when signal recording light and reference light is irradiated on the recording medium having the reflective layer, information recording noise caused by interference between the irradiated recording signal light or reference light and the recording signal light or the reference light reflected by the reflective layer.

The present invention has been devised in view of the above and it is an object of the present invention to provide an optical information recording medium that effectively controls, when signal recording light and reference light are irradiated, information recording noise caused by interference between the irradiated recording signal light or the reference light and the recording signal light or the reference light reflected by the reflective layer.

MEANS FOR SOLVING PROBLEM

To solve the problems and achieve the object, the present invention is an optical information recording medium on which information is recorded by interference of light beams. The optical information recording medium includes a recording layer in which the information is recorded; a reflective layer that reflects a light beam transmitted through the recording layer; and a protective layer that is provided between the recording layer and the reflective layer and has a thickness set such that an interference pattern formed by interference between the light beam not yet reflected by the reflective layer and the light beam reflected by the reflective layer is formed in the protective layer.

In the present invention, the information is recorded in the recording layer by interference of the light beams not yet reflected by the reflective layer.

In the present invention, the information is recorded in the recording layer by the light beams reflected by the reflective layer.

In the present invention, a light beam for recording information in the recording layer is a light beam whose center section is shielded, and the recording layer has a thickness set based on a size of an area in which the light beams interfere.

In the present invention, a light beam for recording information in the recording layer is a light beam whose center section is shielded, and the protective layer has a thickness set based on a size of the center section shielding the light beam.

In the present invention, the reflective layer has convexo-concaves in which control information that is read by irradiation of a light beam and controls recording or reproduction of information is recorded.

In the present invention, the reflective layer reflects a light beam in a direction in which the light beams does not overlap a position of an interference pattern formed in the recording layer by the interference of the light beams not yet reflected by the reflective layer.

In the present invention, the reflective layer reflects the light beam in a direction in which the light beams not yet reflected by the reflective layer does not overlap a position of an interference pattern formed in the recording layer by the interference of the light beams reflected by the reflective layer, to cause the light beams to form an interference pattern in the recording layer.

In the present invention, the reflective layer having the convexo-concaves in which the control information is recorded includes a plurality of reflective layers made of a semitransparent material, and a plurality of interference patterns are formed in the recording layer with a distance between the reflective layers being apart from one another.

In the present invention, a space between reflection surfaces of the outmost two reflective layers among the plurality of reflective layers is equal to or smaller than a thickness of the recording layer.

In the present invention, the recording layer includes a single layer and is a predetermined space apart from the respective reflective layers.

In the present invention, a refractive index of the protective layer and a refractive index of the recording layer are substantially the same.

The present invention further includes a reflective layer provided between the reflective layer having the convexo-concaves in which the control information is recorded and the recording layer, the reflective layer transmitting a part of the light beam and reflecting a part of the light beam.

EFFECT OF THE INVENTION

According to the present invention, the optical information recording medium includes a recording layer in which the information is recorded; a reflective layer that reflects a light beam transmitted through the recording layer; and a protective layer that is provided between the recording layer and the reflective layer and has a thickness set such that an interference pattern formed by interference between the light beam not yet reflected by the reflective layer and the light beam reflected by the reflective layer is formed in the protective layer. The invention, therefore, has an effect of being able to effectively control, when a light beam that changes to recording signal light or reference light is irradiated, information recording noise caused by interference between the irradiated light beam and the light beam reflected by the reflective layer.

According to the present invention, the information is recorded in the recording layer by interference of the light beams not yet reflected by the reflective layer. The invention, therefore, has an effect of being able to obtain the optical information recording medium on which a transmission interference pattern is formed by the light beam not yet reflected by the reflective layer.

According to the present invention, the information is recorded in the recording layer by the light beams reflected by the reflective layer. The invention, therefore, has an effect of being able to obtain the optical information recording medium on which a transmission interference pattern is formed by the light beam reflected by the reflective layer.

According to the present invention, a light beam for recording information in the recording layer is a light beam whose center section is shielded, and the recording layer has a thickness set based on a size of an area in which the light beams interfere. The invention, therefore, has an effect of being able to effectively control, when a light beam that changes to recording signal light or reference light is irradiated, information recording noise caused by interference between the irradiated light beam and the light beam reflected by the reflective layer and appropriately set the thickness of the recording layer such that information can be surely recorded in the recording layer.

According to the present invention, a light beam for recording information in the recording layer is a light beam whose center section is shielded, and the protective layer has a thickness set based on a size of the center section shielding the light beam. The invention, therefore, has an effect of being able to appropriately set the thickness of the protective layer to effectively control, when a light beam that changes to recording signal light or reference light is irradiated, information recording noise caused by interference between the irradiated light beam and the light beam reflected by the reflective layer.

According to the present invention, the reflective layer has convexo-concaves in which control information that is read by irradiation of a light beam and controls recording or reproduction of information is recorded. The invention, therefore, has an effect of being able to efficiently read the control information when the light beam is reflected by the reflective layer.

According to the present invention, the reflective layer reflects a light beam in a direction in which the light beams does not overlap a position of an interference pattern formed in the recording layer by the interference of the light beams not yet reflected by the reflective layer. The invention, therefore, has an effect of being able to effectively control, when a light beam is irradiated on the optical information recording medium on which a transmission interference pattern is formed by the light beam not yet reflected by the reflective layer, information recording noise caused by interference between the irradiated light beam and the light beam reflected by the reflective layer.

According to the present invention, the reflective layer reflects the light beam in a direction in which the light beams not yet reflected by the reflective layer does not overlap a position of an interference pattern formed in the recording layer by the interference of the light beams reflected by the reflective layer, to cause the light beams to form an interference pattern in the recording layer. The invention, therefore, has an effect of being able to effectively control, when a light beam is irradiated on the optical information recording medium on which a transmission interference pattern is formed by the light beam reflected by the reflective layer, information recording noise caused by interference between the irradiated light beam and the light beam reflected by the reflective layer.

According to the present invention, the reflective layer having the convexo-concaves in which the control information is recorded includes a plurality of reflective layers made of a semitransparent material, and a plurality of interference patterns are formed in the recording layer with a distance between the reflective layers being apart from one another. The invention, therefore, has an effect of being able to easily focus light on a recording position of interference patterns on the respective reflective layers and the recording layer using a servo mechanism in an apparatus that records information on and reproduces the information from the optical information recording medium, and able to easily perform recording and reproduction of information and improve a recording density of information in the recording layer.

According to the present invention, a space between reflection surfaces of the outmost two reflective layers among the plurality of reflective layers is equal to or smaller than a thickness of the recording layer. The invention, therefore, has an effect of being able to appropriately y record an interference pattern in the recording layer and appropriately reproduce the interference pattern recorded in the recording layer, using a servo mechanism in an apparatus that records information on and reproduces the information from the optical information recording medium.

According to the present invention, the recording layer includes a single layer and is a predetermined space apart from the respective reflective layers. The invention, therefore, has an effect of being able to appropriately record an interference pattern in the recording layer and appropriately reproduce the interference pattern recorded in the recording layer.

According to the present invention, a refractive index of the protective layer and a refractive index of the recording layer are substantially the same. The invention, therefore, has an effect of being able to control reflection of a light source on an interface between the protective layer and the recording layer and prevent unnecessary interference of light beams.

According to the present invention, further included is a reflective layer provided between the reflective layer having the convexo-concaves in which the control information is recorded and the recording layer, the reflective layer transmitting a part of the light beam and reflecting a part of the light beam. The invention, therefore, has an effect of being able to reduce the light intensity of a light beam reflected by the reflective layer having convexo-concaves in which the control information is recorded and to reduce recording noise caused by the influence of the light beam.

BRIEF DESCRIPTION OF DRAWINGS

[Fig. 1] Fig. 1 is a diagram for explaining a spatial light modulation element 10 provided in an optical information recording and reproducing apparatus that generates recording signal light and reference light.

[Fig. 2] Fig. 2 is a diagram of a modulation state of the light intensity of a light beam transmitted through a plurality of segments 11 of the spatial light modulation element 10 shown in Fig. 1.

[Fig. 3] Fig. 3 is a diagram for explaining a principle of optical information recording processing according to the present invention.

[Fig. 4-1] Fig. 4-1 is a diagram of a light intensity profile of a light beam at the time when the light transmittance of segment boundaries 12 is larger than the light transmittance of the segments 11.

[Fig. 4-2] Fig. 4-2 is a diagram of a light intensity profile of a light beam at the time when the segment boundaries 12 are masked.

[Fig. 4-3] Fig. 4-3 is a diagram of a light intensity profile at the time when the light transmittance of the segment boundaries 12 and the light transmittance of the segments 11 are equal.

[Fig. 5] Fig. 5 is a diagram for explaining the structure of the spatial light modulation element 10 shown in Fig. 1.

[Fig. 6] Fig. 6 is a diagram for explaining the structure of an optical-phase correction element 21.

[Fig. 7-1] Fig. 7-1 is a diagram of a state of liquid crystal molecules at the time when the optical-phase correction element 21 is in an OFF state.

[Fig. 7-2] Fig. 7-2 is a diagram of a state of the liquid crystal molecules at the time when the optical-phase correction element 21 is in an ON state.

[Fig. 8] Fig. 8 is a graph of a relation between an applied voltage applied to a spatial-light-intensity modulation element 20 and the transmittance of a light beam.

[Fig. 9] Fig. 9 is a diagram of the structure of an optical information recording and reproducing apparatus according to an embodiment of the present invention.

[Fig. 10-1] Fig. 10-1 is a diagram of an example in which recording signal light and reference light reflected by a reflective layer of an optical information recording medium form a transmission interference pattern on a recording layer.

[Fig. 10-2] Fig. 10-2 is a diagram of an example in which recording signal light and reference light made incident on the recording layer of the optical information recording medium form a transmission interference pattern on the recording layer.

[Fig. 11] Fig. 11 is a diagram of the structure of an optical information recording and reproducing apparatus having a light shielding plate.

[Fig. 12] Fig. 12 is a diagram for explaining a light shielding film formed in a spatial light modulation element 80.

[Fig. 13] Fig. 13 is a diagram of the structure of an optical information recording medium 74 on which optical information is recorded and from which the optical information is reproduced by the optical information recording and reproducing apparatus shown in Fig. 11.

[Fig. 14] Fig. 14 is a diagram for explaining a relation between optical paths of light beams that form interference patterns on a recording layer 93 during incidence and respective layers of the optical information recording medium 74.

[Fig. 15] Fig. 15 is a diagram for explaining a relation between optical paths of light beams that form transmission interference patterns on the recording layer 93 during incidence and the transmission interference patterns formed by the light beams.

[Fig. 16] Fig. 16 is a diagram for explaining the recording layer 93 on which a plurality of transmission interference patterns are formed by changing a conjugate focus position when information is recorded using incident light.

[Fig. 17] Fig. 17 is a diagram for explaining a relation between optical paths of light beams that form interference patterns on the recording layer 93 reflected by the reflective layer 95 and the respective layers of the optical information recording medium 74.

[Fig. 18] Fig. 18 is a diagram for explaining a relation between optical path of light beams that form a transmission interference pattern on the recording layer 93 reflected by the reflective layer 95 and a transmission interference pattern formed by the light beams.

[Fig. 19] Fig. 19 is a diagram for explaining the recording layer 93 on which a plurality of transmission interference patterns are formed by moving a conjugate focus position when information is recorded using reflected light.

[Fig. 20] Fig. 20 is a diagram of the structure of an optical system of an optical information recording and reproducing apparatus that generates a laser beam for control, recording signal light, and reference light from an identical light source.

[Fig. 21] Fig. 21 is a diagram for explaining an optical information recording medium having a plurality of reflective layers that holds a profile of address information and a guide track.

[Fig. 22] Fig. 22 is a diagram of the structure of an optical information recording medium having a reflective layer 149 that suppresses influences of recording signal light and reference light reflected by reflective layers 145 and 147.

[Fig. 23] Fig. 23 is a diagram of the structure of an optical system of an optical information recording and reproducing apparatus that generates a light beam of P-polarized light and a light beam of S-polarized light using a polarization converting element.

[Fig. 24] Fig. 24 is a diagram of the structure of a conjugate focus conversion lens 154 shown in Fig. 23.

EXPLANATIONS OF LETTERS OR NUMERALS

10, 80 Spatial light modulation elements
11, 81 Segments
12, 82 Segment boundaries
13, 83 Lens apertures
14, 84 ON segments
15, 85 OFF segments
20 Spatial-light-intensity modulation element
21 Optical-phase correction element
30, 34 Sheet polarizing plate
31, 33 Glass substrates
31a Matrix-like TFT segment
32 Liquid crystal
33a TFT counter electrode
40 Encoder
41 Recording signal generator
42 Spatial-light-modulation-element driving device
43 Controller
44 Laser driving device
45 Short-wavelength laser beam source
46, 52, 121, 151 Collimator lenses
47 Dichroic cube
48, 53, 124, 136, 155 Half mirror cubes
49, 126, 157 Objective lenses
50, 74 Optical information recording media
51 Long-wavelength laser beam source
54, 137, 163 Detection lenses
55, 138, 164 Photo-detectors
56, 130, 162 CMOS sensors
57 Amplifier
58 Decoder
59 Reproduction and output device
60, 62, 64, 66, 90, 92, 94, 140, 142, 144, 144a, 144b Protective layers
61, 68, 91, 96, 141, 148 Polycarbonate substrates

63, 93, 143 Recording layers
65, 67, 95, 145, 147, 149 Reflective layers
70 Light shielding plate
71, 127, 134, 159 Convergent lenses
72, 128, 160 Pinholes
73, 129, 135, 161 Magnifying lenses
86 Light shielding film
87 Unmodulated areas
100a, 101a, 110a, 111a Incident light
100b, 101b, 110b, 111b Reflected light
120, 150 Laser beam sources
122, 133, 152 Half-wave plates
123, 125, 156 Polarization beam splitters
131 Reflection mirror
132 Light-intensity adjustment element
146 Transparent resin
153 Polarization conversion element
154 Conjugate focus conversion lens
158 Polarizer
170 First conjugate focus conversion lens
171 Second conjugate focus conversion lens
172 Push-pull mechanism
173 Transparent substrate

BEST MODE(S) FOR CARRYING OUT THE INVENTION

Embodiments of an optical information recording medium according to the present invention are explained in detail below based on the drawings. The present invention is not limited by the embodiments.

Embodiments

First, characteristics of the optical information recording medium according to the present invention are explained. This optical information recording medium has the structure in which a recording layer, a protective layer, and a reflective layer are stacked. The recording layer has a role of recording an interference pattern generated by an interference effect between recording signal light and reference light as optical information. The protective layer has a role of protecting the recording layer from scratches and the like. The reflective layer has a role of reflecting a light beam irradiated on the optical information recording medium.

When recording signal light and reference recording light are irradiated on the optical information recording medium, the recording signal light reflected by the reflective layer and the reference light made incident on the recording layer or the recording signal light made incident on the recording layer and the reference light reflected by the reflective layer form a reflection interference pattern in the recording layer. As a result, recording noise occurs.

Therefore, in the present invention, the occurrence of the recording noise is suppressed by adjusting the thickness of the protective layer such that the reflection interference pattern as a cause of the recording noise is formed only in the protective layer. This optical information recording medium is explained in detail below.

In this explanation, when recording signal light and reference light are generated, optical information is recorded on the optical information recording medium using an optical information recording and reproducing apparatus that generates the recording signal light and the reference light by changing a bias level of the spatial light intensity of light beams emitted from a single light source rather than dividing a light beam emitted from the single light source into two light beams.

However, an apparatus that records optical information in and reproduces optical information from the optical information recording medium according to the present invention is not limited to the optical information recording and reproducing apparatus. The apparatus may be an apparatus that divides a light beam emitted from a single light source into two light beams and generates recording signal light and reference light.

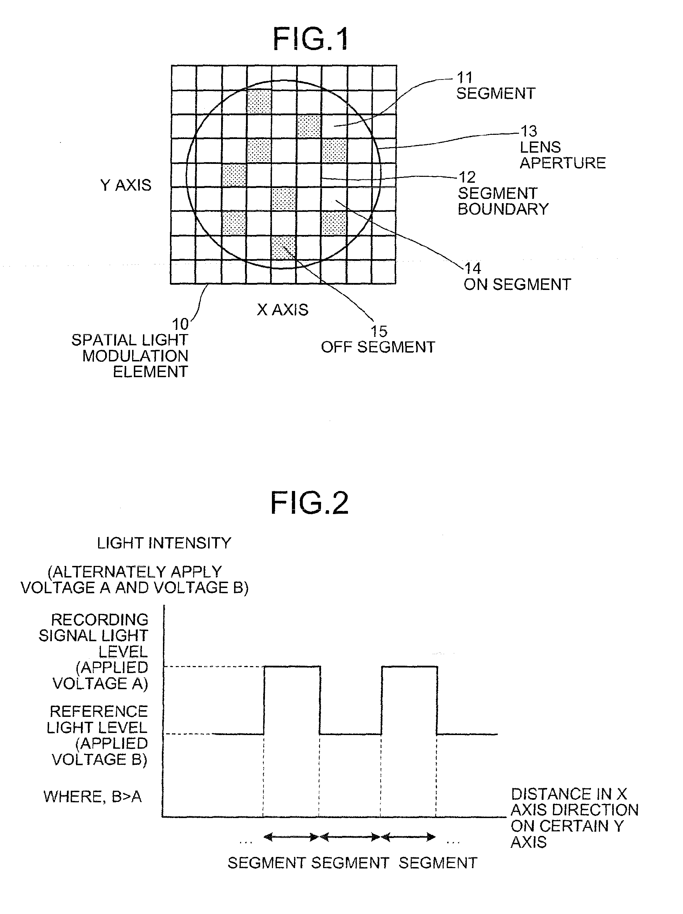

Fig. 1 is a diagram for explaining a spatial light modulation element 10 provided in the optical information recording and reproducing apparatus that generates recording signal light and reference light. As shown in Fig. 1, the spatial light modulation element 10 has segments 11 and segment boundaries 12. In Fig. 1, a relation between the spatial light modulation element 10 and a lens aperture 13 of a collimator lens that causes a light beam to converge on the spatial light modulation element 10 is shown.

Actually, the center section of the spatial light modulation element 10 is covered with a light shielding plate (not shown) that shields transmission of recording signal light and reference light. Thus, because the center section does not play a role of spatial light modulation, the segments 11 in that section are unnecessary. This light shielding plate is explained in detail later.

The respective segments 11 are separated by the segment boundaries 12. The spatial light modulation element 10 is formed of a liquid crystal element or an electric optical element, refractive index anisotropy of which electrically changes. Thus, when a voltage is applied to the respective segments 11, the respective segments 11 change to ON segments 14 in which the intensity of transmitted light or reflected light is high or OFF segments 15 in which the intensity of transmitted light or reflected light is low (not 0).

Fig. 2 is a diagram of a modulation state of the light intensity of a light beam transmitted through a plurality of segments 11 of the spatial light modulation element 100 shown in Fig. 1. In Fig. 2, concepts of recording signal light and reference light are explained.

In Fig. 2, an applied voltage for generating recording signal light is set as A, an applied voltage for generating reference light is set as B (B>A), and the applied voltages A and B are alternately applied to the respective segments 11. This embodiment has a significant characteristic in that recording signal light and reference light are generated in a superimposed state simply by transmitting a laser beam as a light source through the spatial light modulation element 10.

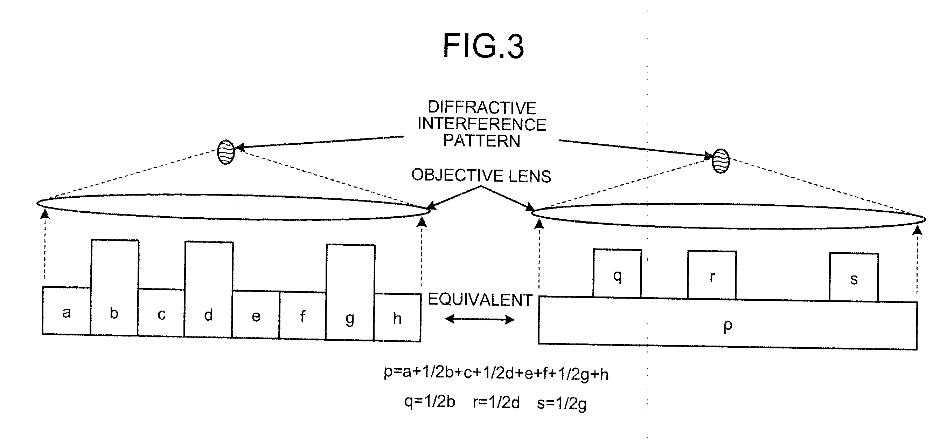

Fig. 3 is a diagram for explaining a principle of optical information recording processing according to the present invention. According to a principle explained below, a light beam generated using the spatial light modulation element 10 is reference light over the entire surface of the light beam and changes to recording signal light that can be subjected to light intensity modulation according to recording information over the entire surface. In the recording layer of the optical information recording medium, the light beam is diffracted and interferes near a focus of an objective lens that converges the light beam and a diffractive interference pattern in which the reference light and the recording signal light are three-dimensionally diffracted and interfere with each other is recorded.

Fig. 3 indicates that an interference pattern generated by a light beam (light intensity components a, b, c, d, e, f, g, and h) transmitted through the respective segments 11 is equivalent to a diffractive interference pattern generated from reference light (a light intensity component p) and recording signal light (light intensity components q, r, and s).

In general, strong far-field diffraction occurs in a three-dimensional area near a focus including a focal plane of an objective lens. According to the Babinet's principle, light intensity components of the respective segments 11 of the spatial light modulation element 10 independently subjected to Fourier transform in integration areas of the respective light intensity components and added up are equivalent to light intensity components of all the segments 11 subjected to Fourier transform in all the integration areas. Based on this equality of the light intensity components and linearity in Fourier transform, a diffractive interference pattern in the example in Fig. 3 can be represented as follows:

A diffractive interference pattern = F(a) + F(b) + F(c) + F(d) + F(e) + F(f) + F(g) + F(h) = F(a) + F(2q) +F(c) + F(2r) + F(e) + F(f) + F(2s) + F(h) = F(a) + 2F(q) + F(c) + 2F(r) + F(e) + F(f) + 2F(s) + F(h) = F(a) + F (1/2 b) + F(q) + F (c) + F(1/2 d) + F(r) + F(e) + F(f) +F (1/2 g) + F(s) + F(h) = F(a) + F(1/2 b) + F(c) + F(1/2 d) + F(e) + F(f) + F(1/2 g) + F (h) + F(q) + F(f) + F(s)

Here, F(x) indicates Fourier transform of a light intensity component x. For simplicity of explanation,
q = 1/2 b,
r = 1/2 d, and
s = 1/2 g.

When p=a+1/2 b+c+1/2 d+e+f+1/2 g+h, according to the Babinet's principle and the linearity of Fourier transform, F(a) + F(1/2 b) + F(c) + F(1/2 d) + F(e) + F(f) + F(1/2 g) + F(h) = F(p). Thus, a diffractive interference pattern = F(p) + (F(q) + F(r) + F(s)) = F(p) + F(q + r + s).

Because the same diffraction phenomenon appears even when the reference light and the recording signal light are separated in this way, a strong diffractive interference pattern due to the reference light and the recording signal light appears in a three-dimensional space near the focus including the focal plane.

On the other hand, in a section considerably apart from the focus, because a diffraction effect is small and a light density is also small, the intensity of a diffractive interference pattern is extremely weak. The diffractive interference pattern is recorded only near a convergent point according to a relation between the intensity and the sensitivity of a recording material.

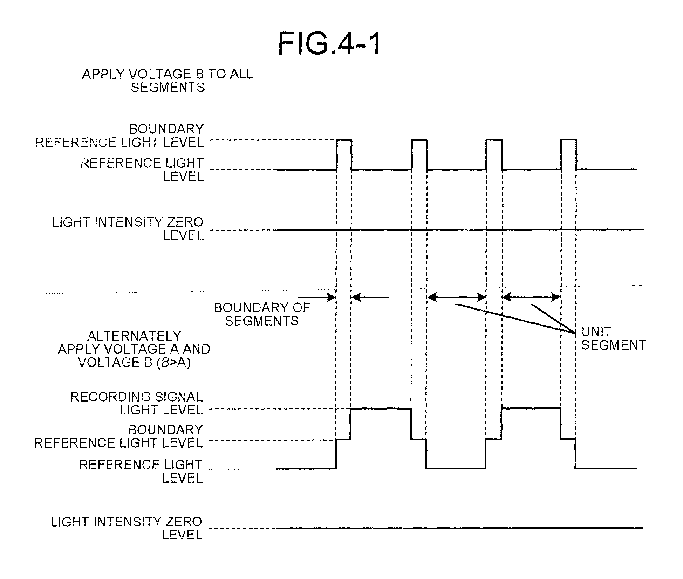

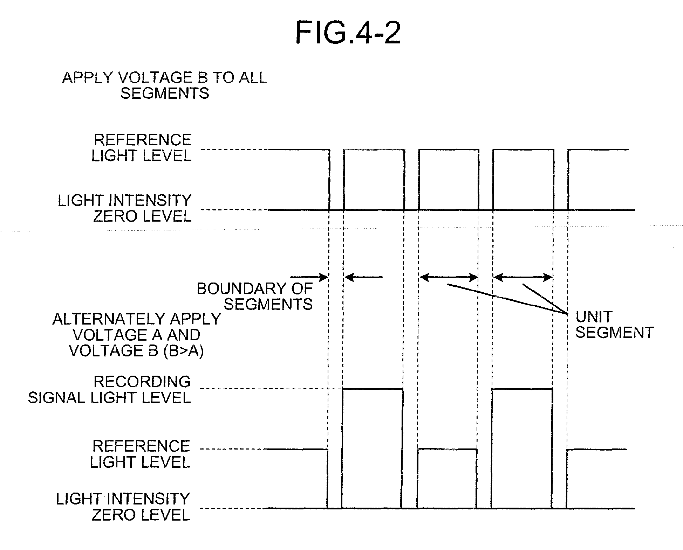

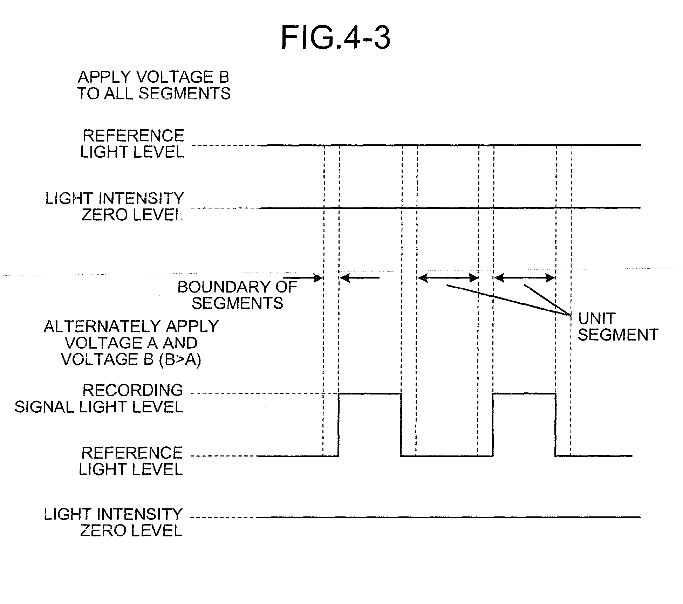

A light intensity level of a light beam for optical information recording that changes when a voltage is applied to the respective segments 11 of the spatial light modulation element 10 is explained. Fig. 4-1 is a diagram of a light intensity profile of a light beam at the time when the light transmittance of the segment boundaries 12 is larger than the light transmittance of the segments 11. Fig. 4-2 is a diagram of a light intensity profile of a light beam at the time when the segment boundaries 12 are masked. Fig. 4-3 is a diagram of a light intensity profile of a light beam at the time when the light transmittance of the segment boundaries 12 is equal to the light transmittance of the segments 11.

When the light transmittance of the segment boundaries 12 is larger than the light transmittance of the segments 11 as shown in Fig. 4-1, when a voltage B is applied to all the segments 11, the light intensity of the sections of the segment boundaries 12 is larger than that of the other sections. In this case, boundary reference light transmitted through the sections of the segment boundaries 12 is also used as a part of reference light.

When the voltage B and a voltage A smaller than the voltage B are alternately applied to the respective segments 11, a light intensity profile of a light beam is a light intensity profile having three different levels, a recording signal light level, a boundary reference light level, and a reference light level.

When the segment boundaries 12 are masked as shown in Fig. 4-2, when the voltage B is applied to all the segments 11, because light is not transmitted through the segment boundaries 12, light intensity is 0 in the sections of the segment boundaries 12.

When the voltage B and the voltage A smaller than the voltage B are alternately applied to the respective segments 11, a light intensity profile of a light beam is a light intensity profile having three different levels, a recording signal light level, a boundary reference light level, and a light intensity zero level at which light intensity is 0.

In this case, the light beam is separated for each of the segments 11. However, an area in which respective light beams are diffracted and interfere with each other after being transmitted through the spatial light modulation element 10 is controlled to be limited to an area near the focus including the focal plane of the convergent lens.

When the light transmittance of the segment boundaries 12 is equal to the light transmittance of the segments 11 as shown in Fig. 4-3, when the voltage B is applied to all the segments 11, the light intensity of the sections of the segment boundaries 12 and the light intensity of the other sections become equal. In this case, both light transmitted through the sections of the segments 11 and light transmitted through the sections of the segment boundaries 12 are used as reference light.

When the voltage B and the voltage A smaller than voltage B are alternately applied to the respective segments 11, recording signal light is superimposed on reference light having a flat light intensity profile. Thus, a light intensity profile of a light beam is a light intensity profile having two different levels, a recording signal light level and a reference light level. In this case, because the reference light has a simple light intensity profile, it is possible to control occurrence of recording noise.

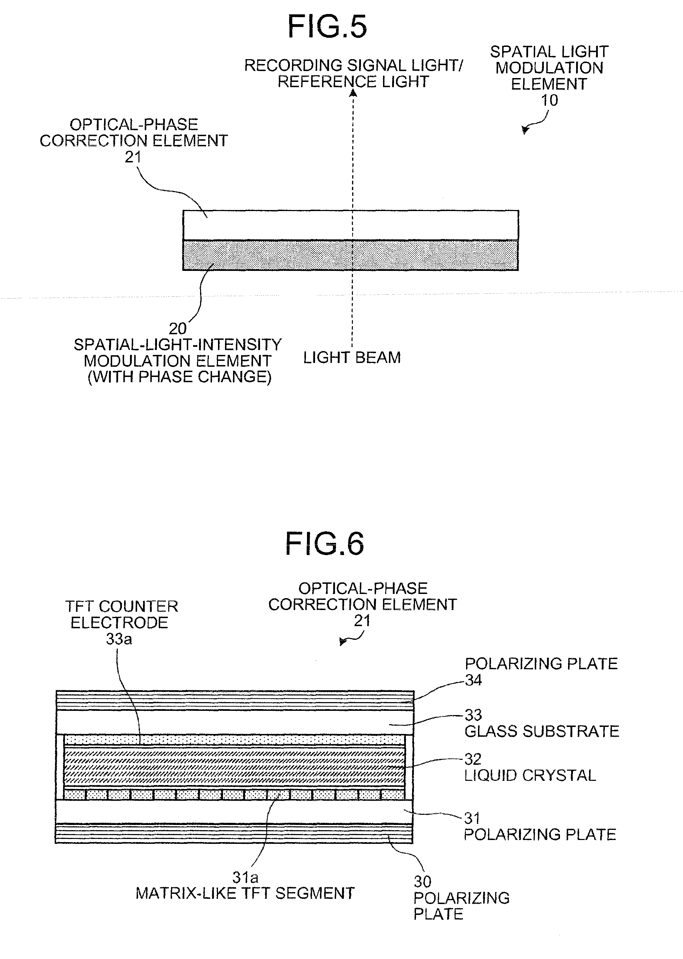

The spatial light modulation element 10 includes a spatial-light-intensity modulation element and an optical-phase correction element. Fig. 5 is a diagram for explaining the structure of the spatial light modulation element 10 shown in Fig. 1. As shown in Fig. 5, recording signal light and reference light are generated by transmitting a light beam through the spatial-light-intensity modulation element 20 and the optical-phase correction element 21 stuck together.

The spatial-light-intensity modulation element 20 includes a liquid crystal element of a TN (Twisted Nematic) type. The optical-phase correction element 21 includes a liquid crystal element of a TFT (Thin Film Transistor) type. In this embodiment, the spatial-light-intensity modulation element 20 and the optical-phase correction element 21 include liquid crystal elements. However, an idea same as that in this embodiment can be applied when electric optical elements are used.

Each of the spatial-light-intensity modulation element 20 and the optical-phase correction element 21 are divided into the respective segments 11 by the segment boundaries 12 as shown in Fig. 1. The respective segments 11 of the spatial-light-intensity modulation element 20 and the optical-phase correction element 21 are arranged to share an area through which a light beam is transmitted.

The spatial-light-intensity modulation element 20 is an element that modulates the light intensity of a light beam transmitted therethrough. No problem occurs when the spatial-light-intensity modulation element 20 modulates only the light intensity of the light beam. However, in the case of an optical element such as a liquid crystal element that uses anisotropy of a refractive index of a substance, an optical phase always shifts.

When transmission light intensity of the respective segments 11 is changed according to recording information, the optical phase also changes. Thus, an optical phase of the reference light always changes according to a combination of ON and OFF of the segments. As a result, the reference light does not function as the reference light.

Naturally, when segments that generate recording signal light and segments that generate reference light are completely set independent from each other by arranging the former segments in the center of a spatial-light-intensity modulation element and arranging the latter segments around the former segments, no problem occurs even if an optical phase changes when light intensity is modulated. However, because a segment area that generates the recording signal light is reduced, an information recording density falls.

Therefore, the change in the optical phase caused by the transmission of the light beam through the spatial-light-intensity modulation element 20 is corrected using the optical-phase correction element 21. Specifically, the optical phase changes according a voltage applied to the spatial-light-intensity modulation element 20. Thus, for example, when laser power of a laser irradiated on the spatial-light-intensity modulation element 20 during information recording is changed, the optical-phase correction element 21 corrects the optical phase according to an optical phase characteristic of the spatial-light-intensity modulation element 20.

The correction of the optical phase can be easily performed by checking optical phase characteristics of the spatial-light-intensity modulation element 20 and the optical-phase correction element 21 with respect to an applied voltage in advance before building the elements in the optical information recording and reproducing apparatus, storing information concerning the optical phase characteristics in a memory provided in the optical information recording and reproducing apparatus, and reading out and using the information.

The structure of the optical-phase correction element 21 is explained. Because a general liquid crystal element of the TN type is used as the spatial-light-intensity modulation element 20, detailed explanation of the structure is omitted. Fig. 6 is a diagram for explaining the structure of the optical-phase correction element 21.

As shown in Fig. 6, the optical-phase correction element 21 has a polarizing plate 30, a glass substrate 31, liquid crystal 32, a glass substrate 33, and a polarizing plate 34. A polarization state of a light beam transmitted through the liquid crystal element of the TN type as the spatial-light-intensity modulation element 20 is linear polarized light. A transmission axis of the light beam through the polarizing plate 30 stuck to the glass substrate 31 coincides with a polarization direction of the linear polarized light.

A matrix TFT segment 31a, which is a TFT-driven segment of a matrix shape, is formed on the glass substrate 31. The polarizing plate 34 is stuck to the glass substrate 33. A direction of a transmission axis of the light beam through the polarizing plate 34 coincides with a direction of the transmission axis of the light beam through the polarizing plate 30.

A TFT counter electrode 33a, which is a counter electrode of the matrix TFT segment 31a formed on the glass substrate 31, is formed on the glass substrate 33. Orientation film treatment performed by rubbing an orientation agent such as polyimide is applied to inner side surfaces of the glass substrate 31 and the glass substrate 33. Liquid crystal molecules are oriented to coincide with the transmission axes of the light beam through the polarizing plate 30 and the polarizing plate 34.

By TFT-driving the liquid crystal molecules by segment units in a matrix shape using the optical-phase correction element 21 having such a structure, the tilt of the liquid crystal molecules can be controlled in a state in which directions of the liquid crystal molecules are aligned in one direction. According to a relation between the refractive index anisotropy and the optical phase, the optical phase of the light beam transmitted through the optical-phase correction element 21 can be freely adjusted. It is possible to correct the shift of the optical phase caused when the spatial-light-intensity modulation element 20 modulates the light intensity of the light beam.

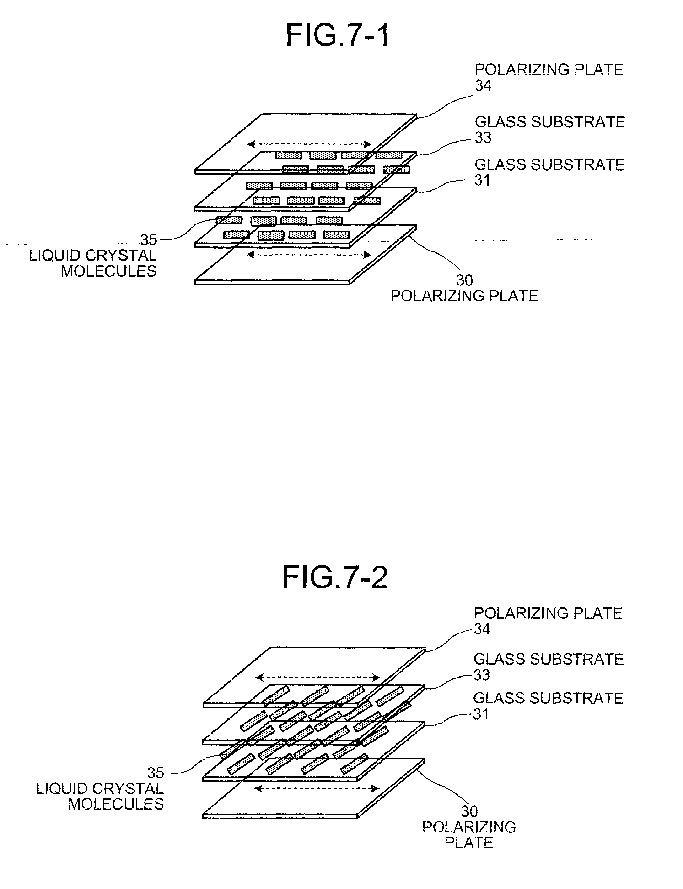

Fig. 7-1 is a diagram of a state of the liquid crystal molecules at the time when the optical-phase correction element 21 is in an OFF state. Fig. 7-2 is a diagram of a state of the liquid crystal molecules at the time when the optical-phase correction element 21 is in an ON state.

As shown in Fig. 7-1, when the optical-phase correction element 21 is in the OFF state, i.e., a voltage is not applied to the segments of the optical-phase correction element 21, liquid crystal molecules are oriented in a direction determined by the rubbing treatment and the orientation film treatment.

As shown in Fig. 7-2, when the optical-phase correction element 21 is in the ON state, i.e., a voltage is applied to the segments of the optical-phase correction element 21, the orientation direction of the liquid crystal molecules 35 changes. The refractive index anisotropy thereof changes according to the change in the orientation direction. The shift of the optical phase of the light beam can be corrected by changing the refractive index anisotropy in this way.

The respective segments of the spatial-light-intensity modulation element 20 and the respective segments of the optical-phase correction element 21 are arranged vertically to be associated with each other in a one to one relation. To perform light intensity modulation according to recording information, in synchronization with the respective segments of the spatial-light-intensity modulation element 20 being brought in to the ON or OFF state, the segments of the optical-phase correction element 21 corresponding to the respective segments of the spatial-light-intensity modulation element 20 are brought into the ON or OFF state. The optical phase of the light beam transmitted through the optical-phase correction element 21 is controlled to be fixed over the entire surface of thereof.

As a specific method of correcting an optical phase, for example, there are a method of driving only the segments of the optical-phase correction element 21 corresponding to the segments of the spatial-light-intensity modulation element 20 brought into the ON state and matching an optical phase of recording signal light to an optical phase of reference light and a method of setting an optical phase at a maximum or minimum transmittance level of the spatial-light-intensity modulation element 20 as a reference and matching optical phases of recording signal light and reference signal light to the optical phase.

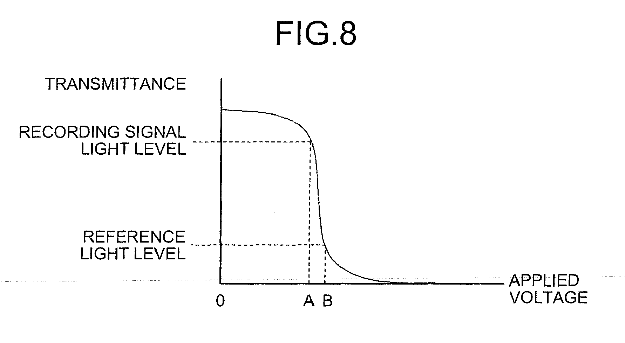

A relation between an applied voltage applied to the spatial-light-intensity modulation element 20 and the transmittance of a light beam is explained. Fig. 8 is a graph of a relation between an applied voltage applied to the spatial-light-intensity modulation element 20 and the transmittance of a light beam.

Because recording signal light has light intensity larger than that of reference light, as shown in Fig. 8, the voltage A smaller than the voltage B applied to the segments that generate reference light is applied to the segments that generate recording signal light such that the transmittance of a light beam through the segments that generate recording signal light is larger than the transmittance of a light beam through the segments that generate reference light.

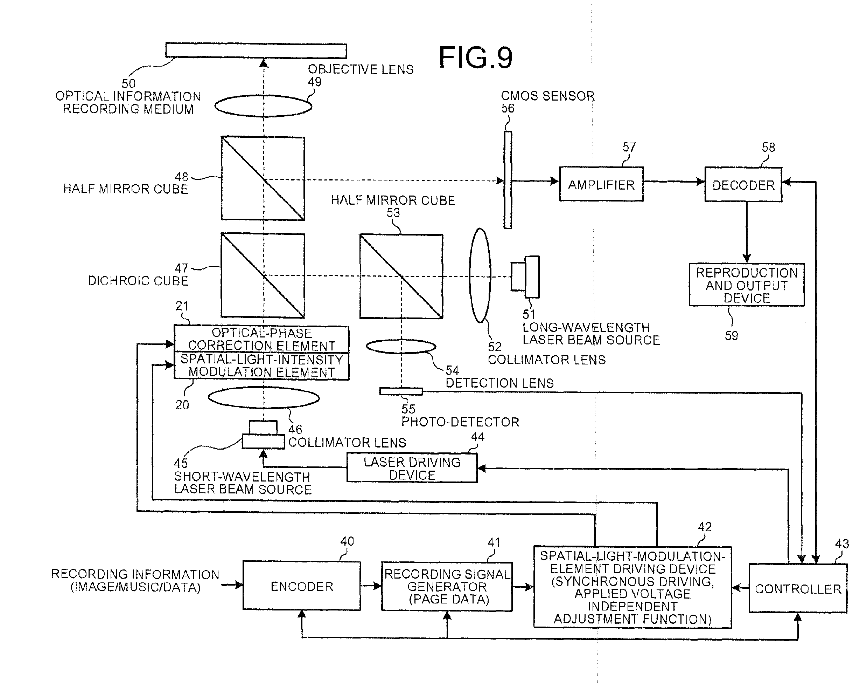

The structure of the optical information recording and reproducing apparatus according to this embodiment is explained. Fig. 9 is a diagram of the structure of the optical information recording and reproducing apparatus according to this embodiment. As shown in Fig. 9, this optical information recording and reproducing apparatus has an encoder 40, a recording signal generator 41, a spatial-light-modulation-element driving device 42, a controller 43, a laser driving device 44, a short-wavelength laser beam source 45, a collimator lens 46, the spatial-light-intensity modulation element 20, the optical-phase correction element 21, a dichroic cube 47, a half mirror cube 48, an objective lens 49, a long-wavelength laser beam source 51, a collimator lens 52, a half mirror cube 53, a detection lens 54, a photo-detector 55, a CMOS (Complementary Metal Oxide Semiconductor) sensor 56, an amplifier 57, a decoder 58, and a reproduction and output device 59.

The short-wavelength laser beam source 45 emits a light beam having light intensity appropriately adjusted for recording or reproduction of information. The adjustment of light intensity is performed by the laser driving device 44 controlled by the controller 43.

A light beam emitted by the short-wavelength laser beam source 45 is converted into parallel light, which propagates substantially in parallel, by the collimator lens 46 and made incident on the spatial light modulation element 10 including the spatial-light-intensity modulation element 20 and the optical-phase correction element 21.

On the other hand, the encoder 40 receives an input of recording information (an image, music, or data) and encodes the received recording information as digital data under the control by the controller 43. The recording signal generator 41 converts a recording signal encoded by the encoder 40 into page data under the control by the controller 43 and sequentially transmits the page data to the spatial-light-modulation-element driving device 42.

The spatial-light-modulation-element driving device 42 applies voltages to the respective segment of the spatial-light-intensity modulation element 20 and the optical-phase correction element 21 independently to drive the respective segments in synchronization with one another. The spatial-light-modulation-element driving device 42 controls the spatial-light-intensity modulation element 20 to perform light intensity modulation of a light beam. The spatial-light-modulation-element driving device 42 controls the optical-phase correction element 21 to perform optical phase correction of the light beam subjected to the light intensity modulation. In this way, the spatial-light-modulation-element driving device 42 causes the spatial-light-intensity modulation element 20 and the optical-phase correction element 21 to generate recording signal light and reference light that share an optical axis and have the same optical phase.

The recording signal light and the reference light generated by the spatial-light-intensity modulation element 20 and the optical-phase correction element 21 is transmitted through the dichroic cube 47 that reflects a long wavelength laser beam, transmitted through the half mirror cube 48, and made incident on the objective lens 49 and reaches a recording layer of the optical information recording medium 50 that records optical information.

In the recording layer of the optical information recording medium 50, an interference pattern is formed by diffractive interference of a light beam that has converged by being transmitted through the objective lens 49 and information is recorded in the recording layer. The optical information recording medium is explained in detail later.

A long wavelength laser beam emitted by the long-wavelength laser beam source 51 is used for control in a focus direction and a track direction of the objective lens 49. This long wavelength laser beam is used for reproduction of address information formed as an emboss pit in advance in the optical information recording medium 50 that is rotated in a plane by a spindle motor (not shown). Access control in recording or reproduction of information is performed based on this address information.

Specifically, the long wavelength laser beam emitted by the long-wavelength laser beam source 51 is converted into parallel light, which propagates substantially in parallel, by the collimator lens 52. The long wavelength laser beam is transmitted through the half mirror cube 53, reflected by the dichroic cube 47, transmitted through the half mirror cube 48, and made incident on the objective lens 49.

The objective lens 49 causes the long wavelength laser beam to converge on an address information recording surface of the optical information recording medium 50. The long wavelength laser beam including the address information and servo information such as track error and focus error signals is reflected by the reflective layer of the optical information recording medium 50 and reaches the photo-detector 55, which detects the servo information and the address information, through the objective lens 49, the half mirror cube 48, the dichroic cube 47, the half mirror cube 53, and the detection lens 54.

The long wavelength laser beam is converted into an electric signal by the photo-detector 55. The address information and the track error and focus error signals are transmitted to the controller 43. The controller 43 performs control of a position of the objective lens 49 based on the information transmitted by the photo-detector 55 and causes the light beam to converge in a predetermined area of the optical information recording medium 50.

The information of the interference pattern recorded in the recording layer of the optical information recording medium 50 is reproduced by irradiating only reference light on the recording layer. This reference light can be generated by equalizing voltages applied to the respective segments of the spatial-light-intensity modulation element 20 and the optical-phase correction element 21.

When this reference light for reproduction is irradiated on the recording layer, the reflected light is reflected by the reflective layer of the optical information recording medium 50 while reproducing a wave surface of the recording signal light recorded in the recording layer and is made incident on the CMOS sensor 56 by the half mirror cube 48.

The CMOS sensor 56 converts the recording signal light reproduced from the recording layer into an electric signal. The electric signal is transmitted through the amplifier 57, decoded by the decoder 58, and reproduced by the reproduction and output device 59.

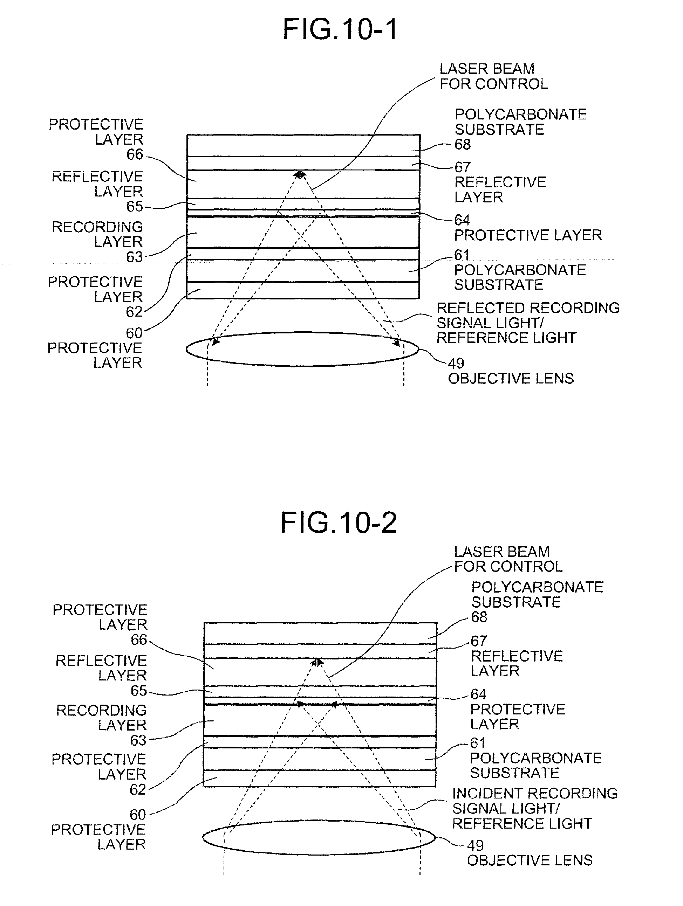

The structure of the optical information recording medium according to this embodiment and an optical path of incident light are explained. Fig. 10-1 is an example in which recording signal light and reference light reflected by a reflective layer of an optical information recording medium form a transmission interference pattern in a recording layer. Fig. 10-2 is an example in which recording signal light and reference light made incident on the recording layer of the optical information recording medium form a transmission interference pattern in the recording layer.

As shown in Fig. 10-1, this optical information recording medium includes a protective layer 60, a polycarbonate substrate 61, a protective layer 62, a recording layer 63, a protective layer 64, a reflective layer 65, a protective layer 66, a reflective layer 67, and a polycarbonate substrate 68.

When a laser beam for control having a long wavelength for controlling an address, a focus, a track, and the like and recording signal light and reference light having short wavelengths are transmitted through the objective lens 49 and made incident on the optical information recording medium trough an identical optical path, the recording signal light and the reference light having the short wavelengths are reflected by the reflective layer 65, which is a dichroic filter.

In this case, a focus position of the laser beam for control and a true focus position of the recording signal light and the reference light substantially coincide with each other. The laser beam for control converges on the reflective layer 67 that holds address information. Actually, because the recording signal light and the reference light are reflected by the reflective layer 65, the recording signal light and the reference light converge in a conjugate position on the opposite side.

The refractive index of the recording layer 63 and the refractive index of the protective layer 64 are substantially identical and are set to control reflection of a light beam on an interface between the recording layer 63 and the protective layer 64 and prevent unnecessary interference of the light beam.

In Fig. 10-2, recording signal light and reflection light made incident on the optical information recording medium converge and diverge in the recording layer 63. In this case, the recording signal light and the reference light form an interference pattern in the recording layer 63 not yet reflected by the reflective layer 65.

In the case of Figs. 10-1 and 10-2, when the recording signal light and the reference light are made incident on the recording layer 63 and when the recording signal light and the reference light are reflected by the reflective layer 65 and then made incident on the recording layer 63 again, the recording signal light and the reference light form a transmission interference pattern. However, when the recording signal light and the reference light made incident on the recording layer 63 and the recording signal light and the reference light reflected by the reflective layer 65 and then made incident on the recording layer 63 again overlap, the recording signal light and the reference light form a reflection interference pattern. This reflection interference pattern becomes recording noise.

This is because, in both the cases of Figs. 10-1 and 10-2, incident light of the recording signal light and the reference light transmitted through the center of the objective lens 49 and made incident on the optical information recording medium is present. This is because this incident light and the reflected light of the recording signal light and the reference light reflected by the reflective layer 65 are diffracted and interfere with each other or the reflected light of this incident light reflected by the reflective layer 65 and the incident light of the recording signal light and the reference light are diffracted and interfere with each other.

Therefore, the reflection interference pattern formed by the incident light and the reflected light can be controlled by arranging a light shielding plate that shields the center of the incident light made incident on the objective lens 49. The optical information recording and reproduction apparatus in which this light shielding plate is arranged is explained below.

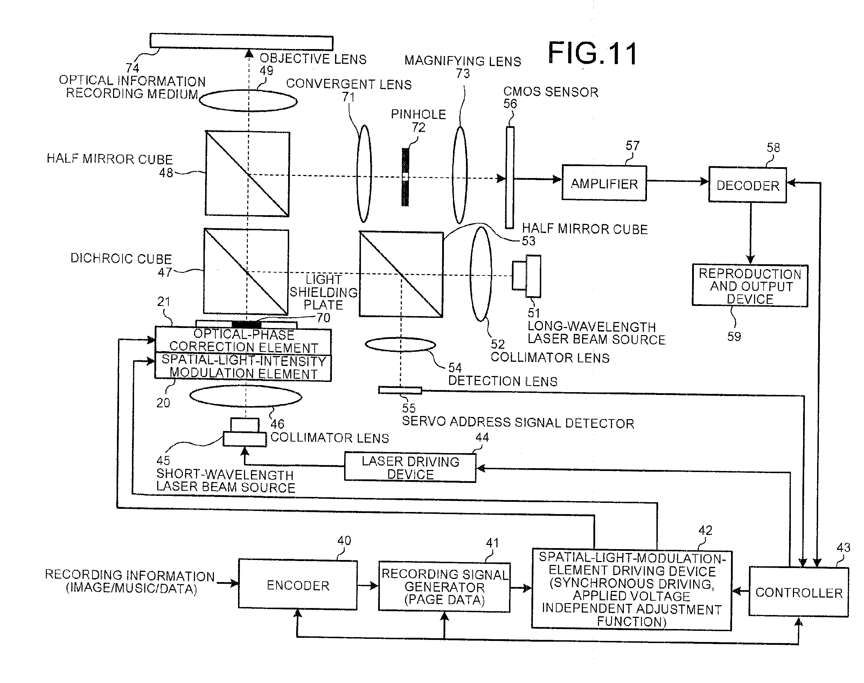

Fig. 11 is a diagram showing the structure of the optical information recording and reproducing apparatus that has the light shielding plate. This optical information recording and reproducing apparatus is different from the optical information recording and reproducing apparatus shown in Fig. 9 in that a light shielding plate 70, a convergent lens 71, a pinhole 72, and a magnifying lens 73 are arranged anew.

In Fig. 11, components same as those of the optical information recording and reproducing apparatus in Fig. 9 are denoted by the same reference numerals and detailed explanation of the components is omitted. The structure of an optical information recording medium 74 shown in Fig. 11 is different from the structure of the optical information recording medium 50 shown in Fig. 10-1 or 10-2. This difference is explained in detail later.

As shown in Fig. 11, in this optical information recording and reproducing apparatus, a circular light shielding plate 70 that shields the center section of a light beam irradiated on the optical information recording medium 74 is arranged and an effective area of the spatial light modulation element 10 including the spatial-light-intensity modulation element 20 and the optical-phase correction element 21 is limited. Consequently, recording signal light and reference light of a ring belt shape are generated.

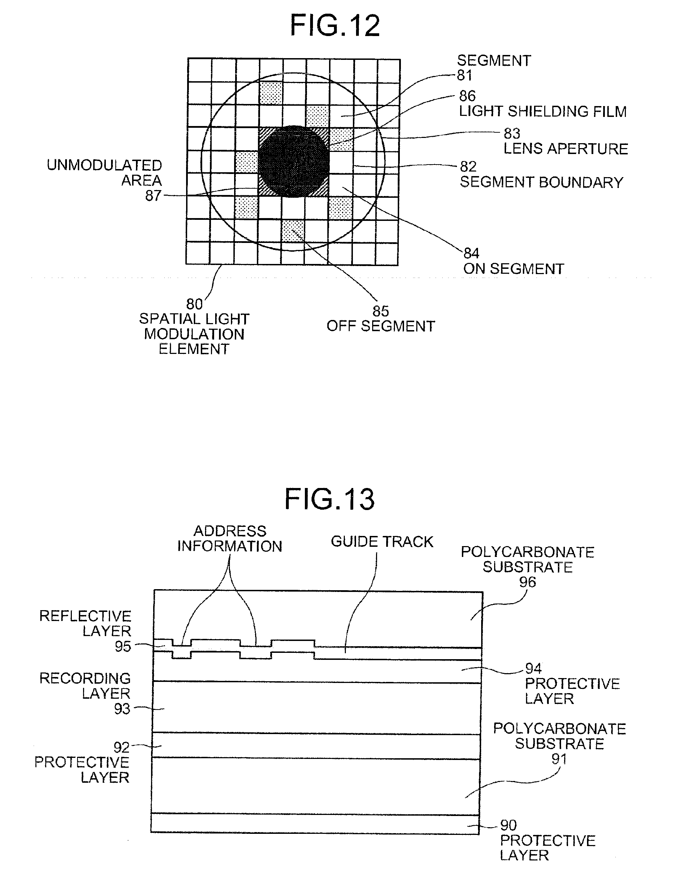

Instead of arranging the light shielding plate 70, a light shielding film may be formed in the spatial light modulation element 10 to limit the effective area of the spatial light modulation element 10. Fig. 12 is a diagram for explaining a light shielding film formed in the spatial light modulation element 80.

As shown in Fig. 12, like the spatial light modulation element 10 shown in Fig. 1, the spatial light modulation element 80 has segments 81 and segment boundaries 82. When a voltage is applied to the respective segments 81, the respective segments 81 changes to ON segments 83 in which the intensity of transmitted light or reflected light is high or OFF segments 85 in which the intensity of transmitted light or reflected light is low (not 0).

The spatial light modulation element 80 further has a light shielding film 86. The light shielding film 86 can be easily formed by performing mask treatment when the TFT of the optical-phase correction element 21 is formed. The segments 81 having sections overlapping the light shielding film 86 function as unmodulated areas 87 and generate only reference light.

In Figs. 11 and 12, the light shielding plate 70 or the light shielding film 86 are circular. However, the shape of the light shielding plate 70 or the light shielding film 86 does not always have to be circular and may be any shape as long as machining accuracy can be secured. Similarly, a lens aperture 83 may be square like the shape of the spatial-light modulation element 80.

Referring back to Fig. 11, the recording signal light and the reference light generated by the spatial-light-intensity modulation element 20 and the optical-phase correction element 21 are converted into light beams of a ring belt shape by the light shielding plate 70, transmitted through the dichroic cube 47, the half mirror cube 48, and the objective lens 49, and made incident on the optical information recording medium 74.

Fig. 13 is a diagram of the structure of the optical information recording medium 74 on which optical information is recorded and from which the optical information is reproduced by the optical information recording and reproducing apparatus shown in fig. 11. The optical information recording medium 74 includes a protective layer 90, a polycarbonate substrate 91, a protective layer 92, a recording layer 93, a protective layer 94, a reflective layer 95, and a polycarbonate substrate 96.

In the optical information recording medium 74, the protective layer 64 and the reflective layer 67 of the optical information recording medium 50 shown in Figs. 10-1 and 10-2 are directly stacked one on top of the other to make it unnecessary to provide the reflective layer 65 and the protective layer 66. In other words, the protective layer 64 of the optical information recording medium 50 corresponds to the protective layer 94 of the optical information recording medium 74 and the reflective layer 67 of the optical information recording medium 50 corresponds to the reflective layer 95 of the optical information recording medium 74. Because the structure of the optical information recording medium 74 is simple, production cost is low. Address information and a profile of a guide track formed on the polycarbonate substrate 96 are reflected on the reflective layer 95.

Referring back to Fig. 11, the light beam reflected by the reflective layer 95 of the optical information recording medium 74 explained with reference to Fig. 13 is made incident on the CMOS sensor 56 through the objective lens 49, the half mirror cube 48, the convergent lens 71, the pinhole 72, and the magnifying lens 73.

The reflective layer 95 of the optical information recording medium 74, on which the address information and the profile of the guide track are reflected, generates higher-order diffractive light. Thus, the diffractive light is shielded using the pinhole 72 to remove noise during reproduction.

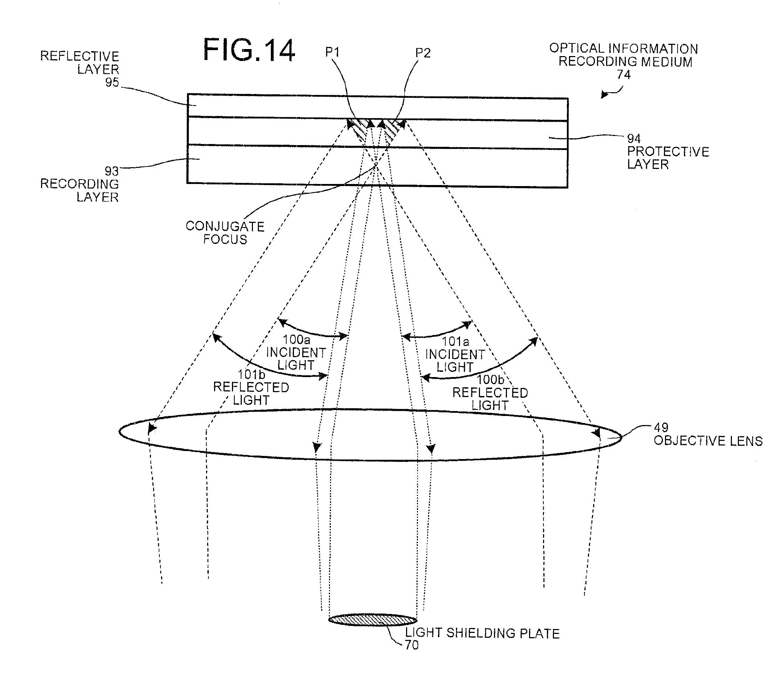

A relation between optical paths of light beams used for recording information in and reproducing the information from the optical information recording medium 74 and the respective layers of the optical information recording medium 74 is explained. Fig. 14 is a diagram of for explaining a relation between optical paths of light beams that form interference patterns on the recording layer 93 during incidence and the respective layers of the optical information recording medium 74. In Fig. 14, the protective layer 90, the polycarbonate substrate 91, the protective layer 92, and the polycarbonate substrate 96 of the optical information recording medium 74 are not shown.

In the case shown in Fig. 14, incident lights 100a and 101a transmitted through the objective lens 49 and made incident on the optical information recording medium 74 are reflected by the reflective layer 95 and change to reflected lights 100b and 101b, respectively. Actually, light beams of the incident lights 100a and 101a are light beams of a ring belt shape, the center sections of which are shielded by the light shielding plate 70 explained with reference to Fig. 11.

The recording signal light and the reference light included in the light beam before reaching the reflective layer 95 are diffracted and interfere with each other in a three-dimensional area near a conjugate focus of the objective lens 49 in the recording layer 93 formed in an appropriate thickness. The conjugate focus means a convergent point of the recording signal light and the reference light in the recording layer 93.

In this case, by appropriately selecting a position of the conjugate focus and the thickness of the protective layer 94, it is possible to prevent a reflection interference pattern from being recorded in the recording layer 93 because of interference between the incident lights 100a and 101a and the reflected lights 100b and 101b.

Specifically, the position of the conjugate focus and the thickness of the protective layer 94 are set such that areas in which the incident lights 100a and 101a and the reflected lights 100b and 101b form reflection interference patterns are within the protective layer 94.

Although reflection interference patterns are formed in areas P1 and P2 indicated by oblique lines where the incident lights 100a and 101a and the reflected lights 100b and 101b overlap, the reflection interference patterns are prevented from being recorded in the recording layer 93 by determining the thickness of the protective layer 94 such that the areas P1 and P2 are within the protective layer 94.

Unnecessary multiple interference is controlled by appropriately selecting a size of the light shielding plate 70 (or the light shielding film 86 shown in Fig. 12) and spacing apart a formation position of a transmission interference pattern recorded in the recording layer 93 and optical paths of the reflected lights 100b and 101b reflected by the reflective layer 95. Moreover, because the transmission interference pattern is generated only in the recording layer 93 and information is recorded in the recording layer 93, it is possible to improve diffraction efficiency.

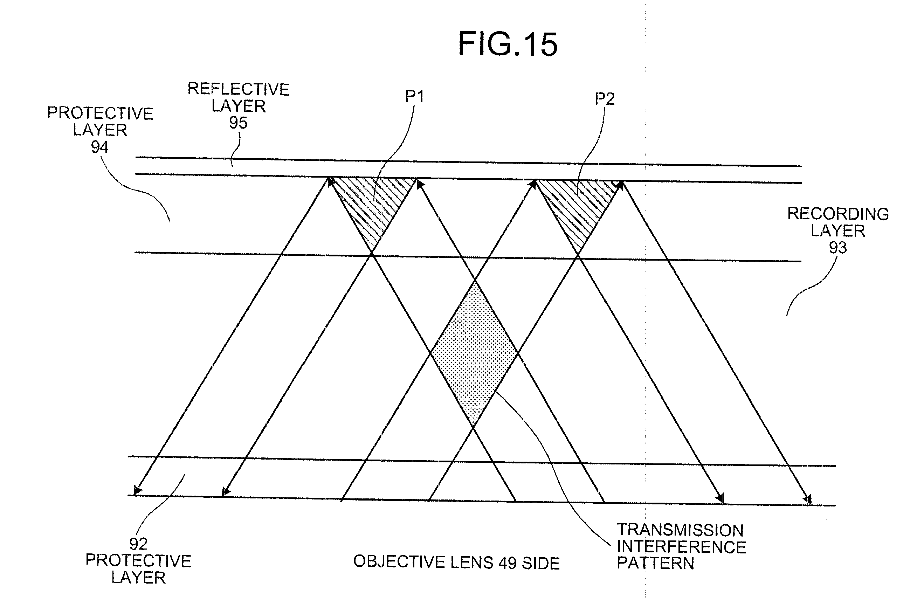

Fig. 15 is a diagram for explaining a relation between optical paths of light beams that form transmission interference patterns on the recording layer 93 during incidence and the transmission interference patterns formed by the light beams. In this case, recording signal light and reference light held by incident light before reaching the reflective layer 95 are diffracted near a conjugate focus and the recording signal light and the reference light held by the diffracted light interfere with each other to form a transmission interference pattern.

It is also possible to form a plurality of transmission interference patterns in a depth direction of the recording layer 93 by appropriately selecting the thickness of the recording layer 93 and the thickness of the protective layer 94 and changing a conjugate focus position. It is possible to realize a recording capacity several times as large as that of the recording layer 93 if the formation of the transmission interference patterns is combined with in-plane multiple recording for multiplexing the transmission interference patterns in a track direction and a peripheral direction of the recording layer 93.

In this case, as a method of changing the conjugate focus position, an apparatus that moves the collimator lens 52 constituting the optical system for the laser beam for control shown in Fig. 11 back and forth is provided, the collimator lens 52 is moved according to an instruction of the controller 43, and the objective lens 49 is moved by a servo mechanism.

Consequently, it is possible to change the position of the conjugate focus without changing the focus position on the optical information recording medium 74 of the laser beam for control. Instead of moving the collimator lens 52, the collimator lens 46 may be moved back and forth to change the position of the conjugate focus.

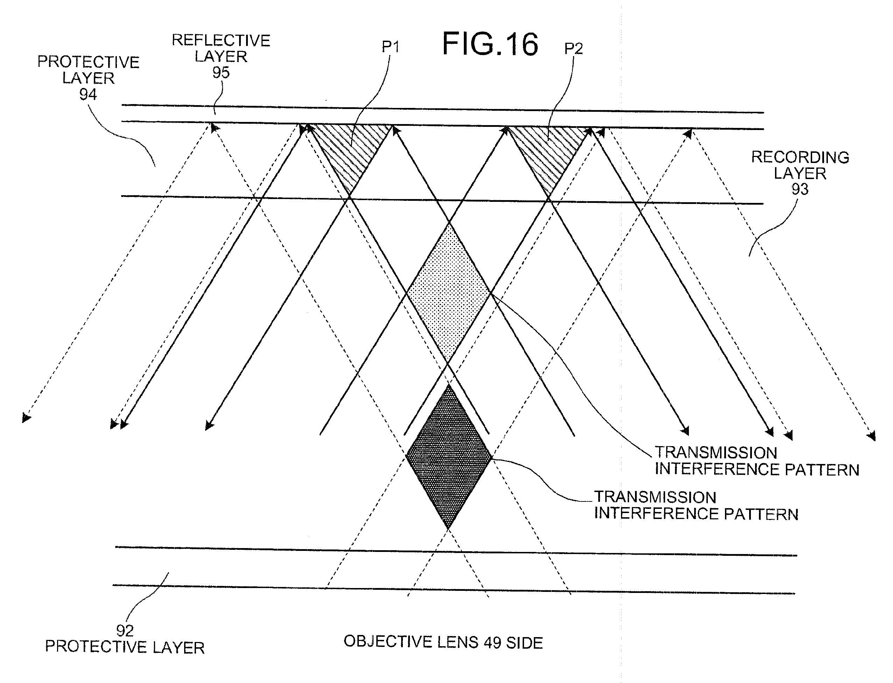

Fig. 16 is a diagram for explaining the recording layer 93 on which a plurality of transmission interference patterns are formed by changing the conjugate focus position when information is recorded using incident light. In an example in Fig. 16, two transmission interference patterns are formed in the depth direction of the recording layer 93 by servo control employing the laser beam for control.

When information is reproduced from the formed transmission interference pattern, as in the case of recording of the information, focus offset is adjusted by the servo control employing the laser beam for control to point reference light at conjugate focus positions of the transmission interference patterns and reference light with a low output is irradiated. In this case, because the conjugate focus positions are different and phases and intensity patterns of the reference light due to a diffraction effect are different between the two transmission interference patterns, interference noise is small.

A formula for calculating the thickness of the protective layer 94 appropriate for preventing a reflection interference pattern from being formed and preventing recording noise from occurring is explained. When a radius of the objective lens 49 is "a", a radius of the light shielding plate 70 (circular) is "m", and a distance from the reflective layer 95 to the conjugate focus is "s", depth "d" of areas where the light beam before reaching the reflective layer 95 and the light beam reflected by the reflective layer 95, which is shown as the transmission interference patterns in Fig. 15, is represented as d = s(a - m)/(a + m). For example, when "a" is 2.5 mm, "m" is 1.5 mm, and "s" is 0.5 mm, d=125 $\mu$m.

When a focal length of the objective lens 49 is "f", a numerical aperture of the objective lens 49 is a/f and a numerical aperture of a mask section masked by the light shielding plate 70 is m/f, the depth "d" can also be represented as follows:

$$d = s(NA1 - NA2)/(NA1 + NA2)$$

$$NA1 = a/f,$$

$$NA2 = m/f.$$

By setting the thickness of the protective layer 94 to be equal to or larger than "d", it is possible to form the reflection interference pattern in the protective layer 94 and prevent the reflection interference pattern from being recorded in the recording layer 93.

In Fig. 16, for simplification of illustration, the two transmission interference patterns do not overlap at all and are recorded separately from each other. However, it is also possible to multiplex the transmission interference patters such that parts of the transmission interference patterns overlap in the depth direction as in the in-plane multiple recording for multiplexing the transmission interference patterns in the track direction and the peripheral direction of the optical information recording medium 74.

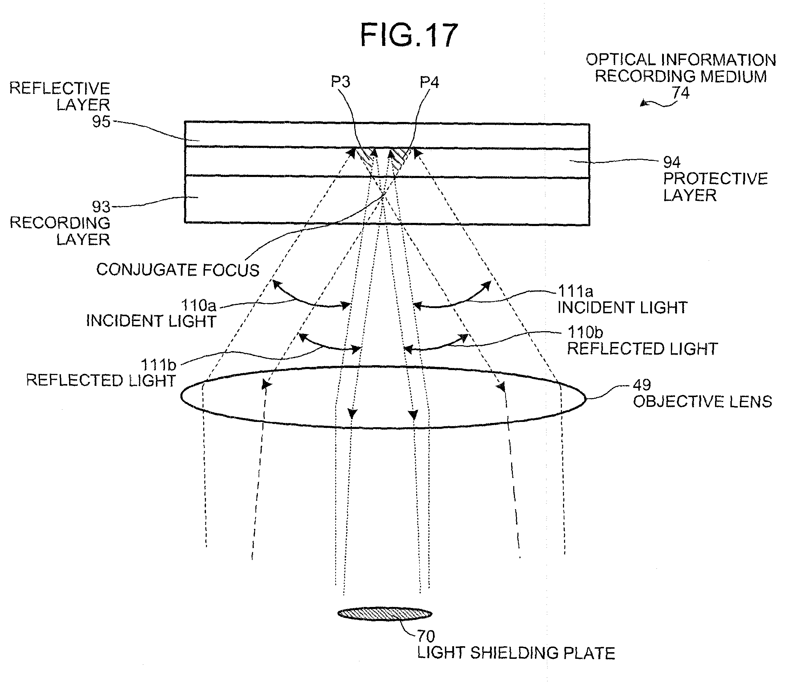

Fig. 17 is a diagram for explaining a relation between optical paths of light beams that form interference patterns on the recording layer 93 reflected by the reflective layer 95 and the respective layers of the optical information recording medium 74. In Fig. 17, the protective layer 90, the polycarbonate substrate 91, the protective layer 92, and the polycarbonate substrate 96 of the optical information recording medium 74 are not shown.

In the case shown in Fig. 17, incident lights 110a and 111a transmitted through the objective lens 49 and made incident on the optical information recording medium 74 are reflected by the reflective layer 95 and change to reflected lights 110b and 111b, respectively. Actually, light beams of the incident lights 110a and 111a are light beams of a ring belt shape, the center sections of which are shielded by the light shielding plate 70 explained with reference to Fig. 11.

The recording signal light and the reference light included in the light beam that has been reflected by the reflective layer 95 are diffracted and interfere with each other in a three-dimensional area near a conjugate focus of the objective lens 49 in the recording layer 93 formed in an appropriate thickness. The conjugate focus means a convergent point of the recording signal light and the reference light in the recording layer 93.

In this case, similarly to Fig. 14, by appropriately selecting a position of the conjugate focus and the thickness of the protective layer 94, it is possible to prevent a reflection interference pattern from being recorded in the recording layer 93 because of interference between the incident lights 110a and 111a and the reflected lights 110b and 111b.

Specifically, the position of the conjugate focus and the thickness of the protective layer 94 are set such that areas in which the incident lights 110a and 111a and the reflected lights 110b and 111b form reflection interference patterns are within the protective layer 94.

Although reflection interference patterns are formed in areas P3 and P4 indicated by oblique lines where the incident lights 110a and 111a and the reflected lights 110b and 111b overlap, the reflection interference patterns are prevented from being recorded in the recording layer 93 by determining the thickness of the protective layer 94 such that the areas P3 and P4 are within the protective layer 94.

Unnecessary multiple interference is controlled by appropriately selecting a size of the light shielding plate 70 (or the light shielding film 86 shown in Fig. 12) and spacing apart a formation position of a transmission interference pattern recorded in the recording layer 93 and optical paths of the reflected lights 110b and 111b before reaching the reflective layer 95. Moreover, because the transmission interference pattern is generated only in the recording layer 93 and information is recorded in the recording layer 93, it is possible to improve diffraction efficiency.

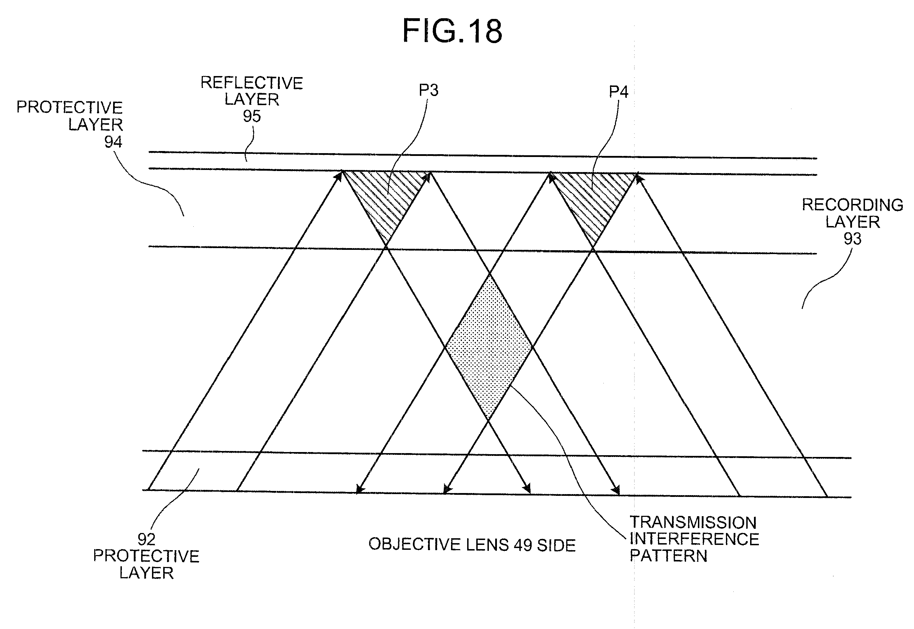

Fig. 18 is a diagram for explaining a relation between optical paths of light beams that form transmission interference patterns on the recording layer 93 after the light beams are reflected by the reflective layer 95 and the transmission interference patterns formed by the light beams. In this case, recording signal light and reference light held by incident light before reaching the reflective layer 95 are diffracted near a conjugate focus and the recording signal light and the reference light held by the diffracted light interfere with each other to form a transmission interference pattern.

It is also possible to form a plurality of transmission interference patterns in a depth direction of the recording layer 93 by appropriately selecting the thickness of the recording layer 93 and the thickness of the protective layer 94 and changing a conjugate focus position. It is possible to realize a recording capacity several times as large as that of the recording layer 93 if the formation of the transmission interference patterns is combined with in-plane multiple recording of the recording layer 93.

In this case, as a method of changing the conjugate focus position, an apparatus that moves the collimator lens 52 constituting the optical system for the laser beam for control shown in Fig. 11 back and forth is provided, the collimator lens 52 is moved according to an instruction of the controller 43, and the objective lens 49 is moved by a servo mechanism.

Consequently, it is possible to change the position of the conjugate focus without changing the focus position on the optical information recording medium 74 of the laser beam for control. Instead of moving the collimator lens 52, the collimator lens 46 may be moved back and forth to change the position of the conjugate focus.

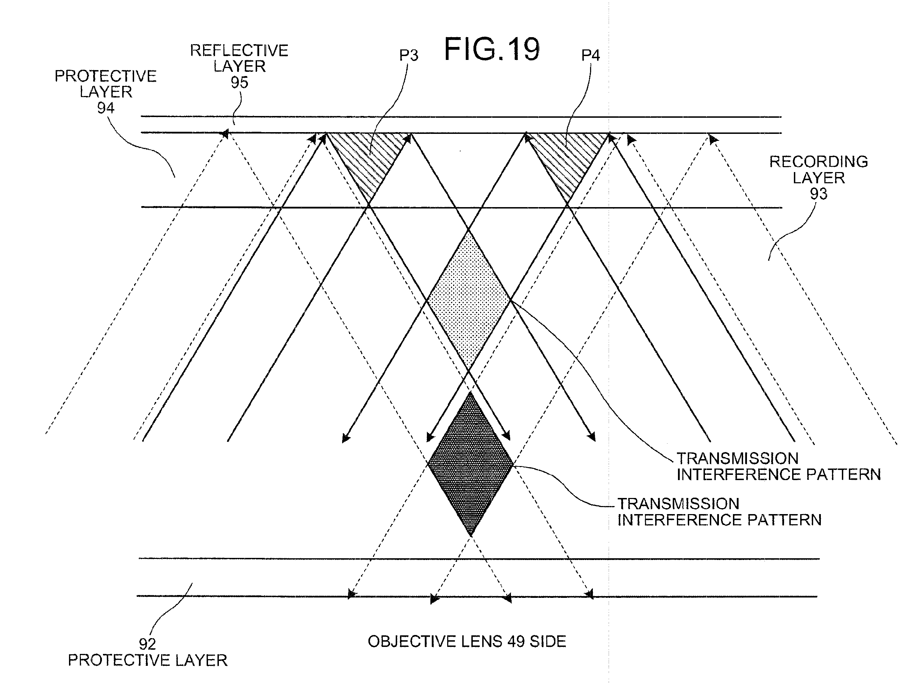

Fig. 19 is a diagram for explaining the recording layer 93 on which a plurality of transmission interference patterns are formed by changing the conjugate focus position when information is recorded using reflected light. In an example in Fig. 19, two transmission interference patterns are formed in the depth direction of the recording layer 93 by servo control employing the laser beam for control.

When information is reproduced from the formed transmission interference pattern, as in the case of recording of the information, focus offset is adjusted by the servo control employing the laser beam for control to point reference light at conjugate focus positions of the transmission interference patterns and reference light with a low output is irradiated. In this case, because the conjugate focus positions are different and phases and intensity patterns of the reference light due to a diffraction effect are different between the two transmission interference patterns, interference noise is small.

A formula for calculating an appropriate thickness of the protective layer 94 in this case is the same as the formula for calculating the thickness of the protective layer 94 when information is recorded using incident light explained with reference to Figs. 14 to 16. In other words, in the case of Figs. 17 to 19, by setting the thickness of the protective layer 94 to be equal to or larger than "d", it is possible to form a reflection interference pattern in the protective layer 94 and prevent a reflection interference pattern from being recorded in the recording layer 93.

In Fig. 19, for simplification of illustration, the two transmission interference patterns do not overlap at all and are recorded separately from each other. However, it is also possible to multiplex the transmission interference patters such that parts of the transmission interference patterns overlap in the depth direction as in the in-plane multiple recording for multiplexing the transmission interference patterns in the track direction and the peripheral direction of the optical information recording medium 74.

As shown in Figs. 14 to 19, it is possible to form a transmission interference pattern in the recording layer 93 of the optical information recording medium 74 only with the incident lights 100a and 101a or the reflected lights 110b and 111b. Thus, recording and reproduction without the influence of complicated multiple recording and with low noise are possible.

During reproduction of information, even when convexo-concaves of address information and a guide track are formed in the reflective layer 95, because a direction of reference light is always fixed, even if patterns of the reference light are modulated by the convexo-concaves of the reflective layer 95, the modulated patterns are always stable and do not multiply interfere with each other. Thus, it is possible to stably form interference patterns.

Therefore, it is possible to make it unnecessary to provide a special optical film that transmits a laser beam for control and reflects recording signal light and reference light as in the conventional optical information recording medium in addition to the reflective layer on which the convexo-concaves of address information and a guide track are formed.

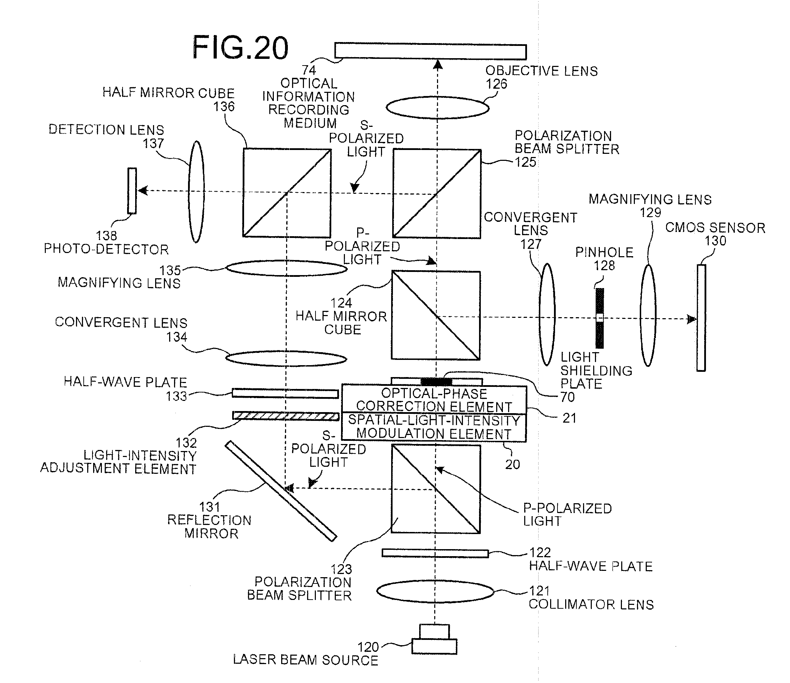

An optical information recording and reproducing apparatus that generates a laser beam for control for controlling an address, a focus, a track, and the like and recording signal light and reference light from an identical light source is explained. Fig. 20 is a diagram of the structure of an optical system of the optical information recording and reproducing apparatus that generates a laser beam for control and recording signal light and reference light from an identical light source.

As shown in Fig. 20, this optical system has a laser beam source 120, a collimator lens 121, a half-wave plate 122, a polarization beam splitter 123, the spatial-light-intensity modulation element 20, the optical-phase correction element 21, the light shielding plate 70, a half mirror cube 124, a polarization beam splitter 125, an objective lens 126, a convergent lens 127, a pinhole 128, a magnifying lens 129, a CMOS sensor 130, a reflection mirror 131, a light-intensity adjustment element 132, a half-wave plate 133, a convergent lens 134, a magnifying lens 135, a half mirror cube 136, a detection lens 137, and a photo-detector 138.

In this optical system, when a light beam of P-polarized light is emitted by the laser beam source 120, the light beam of the P-polarized light is transmitted through the collimator lens 121 and made incident on the half-wave plate 122 in a state in which the light beam is tilted with respect to a crystal optical axis of the half-wave plate 122.

The light beam transmitted through the half-wave plate 122 is made incident on the polarization beam splitter 123 in a polarized state in which a plane of polarization is tilted with respect to a paper surface and is divided into a light beam of a P-polarized light component and a light beam of an S-polarized light component. The light intensities of the light beam of the P-polarized light component and the light beam of the S-polarized light component can be freely adjusted by adjusting the tilt of the half-wave plate 122.

The light beam of the P-polarized light component divided by the polarization beam splitter 123 is transmitted through the spatial-light-intensity modulation element 20, the optical-phase correction element 21, the light shielding plate 70, the half mirror cube 124, the polarization beam splitter 125, and the objective lens 126 and made incident on the optical information recording medium 74 and forms an interference pattern to thereby record information on the optical information recording medium 74.

When the information recorded on the optical information recording medium 74 is reproduced, the light beam of the P-polarized light as reference light is irradiated on the optical information recording medium 74. The light beam reflected by the optical information recording medium 74 is made incident on the CMOS sensor 130 through the objective lens 126, the polarization beam splitter 125, the half mirror cube 124, the convergent lens 127, the pinhole 128, and the magnifying lens 129. Thereafter, the light beam made incident on the CMOS sensor 130 is converted into an electric signal and subjected to amplification processing and decode processing, whereby the information stored on the optical information recording medium 74 is reproduced.

On the other hand, the light beam of the S-polarized light component is a laser beam for control used for the control of the objective lens 126. After being emitted from the polarization beam splitter 123, the light beam of the S-polarized light component is reflected by the reflection mirror 131 and made incident on the light-intensity adjustment element 132 that optimizes the light intensity of the light beam of the S-polarized light component during recording or during reproduction.

When the light-intensity adjustment element 132 includes a liquid crystal element of the TN type, a polarization transmission axis of a polarizing plate provided on a light beam incidence side of the light-intensity adjustment element 132 and a plane of polarization of the light beam of the S-polarized light component are matched. To reset a polarization state of the light beam converted into the P-polarized light when the light beam is emitted from the light-intensity adjustment element 132 to the S-polarized light, a polarization-plane rotation element such as the half-wave plate 133 is provided in the optical system.

The light beam of the S-polarized light component transmitted through the half-wave plate 133 is transmitted through the convergent lens 134 and the magnifying lens 135, reflected by the half mirror cube 136, and made incident on the polarization beam splitter 125.

The light beam of the S-polarized light component is reflected by the polarization beam splitter 125 that reflects the light beam of the S-polarized light component, transmitted through the objective lens 126, and made incident on the optical information recording medium 74. Thereafter, the light beam of the S-polarized light component is reflected by the reflective layer 95 of the optical information recording medium 74 shown in Fig. 13, transmitted through the objective lens 126, the polarization beam splitter 125, the half mirror cube 136, and the detection lens 137 and converted into an electric signal by the photo-detector 138 that detects address information and servo information such as track error and focus error signals.

The signal obtained by the photo-detector 138 is transmitted to a controller that performs servo control of the objective lens 126. The control of a position of the objective lens 126 is performed on the information. It is possible to cause the light beam to converge in a predetermined area of the optical information recording medium 74 according to such control.

In this case, a plane of polarization of the light beam of the P-polarized light component that changes to recording signal light and reference light and a plane of polarization of the light beam of the S-polarized light component used for servo control are orthogonal to each other. Because interference is not caused by the light beam of the P-polarized light component and the light beam of the S-polarized light component, there is an advantage that an unnecessary interference pattern is not recorded in the recording layer of the optical information recording medium 74.

By providing an apparatus that moves the convergent lens 134 and the magnifying lens 135 back and forth, it is possible to freely determine a position where the light beam of the P-polarized light component converges and a position where the light beam of the S-polarized light component converges.

In Fig. 13, only one reflective layer 95 that holds a profile of address information and a guide track is provided. However, a plurality of such reflective layers 95 may be provided.

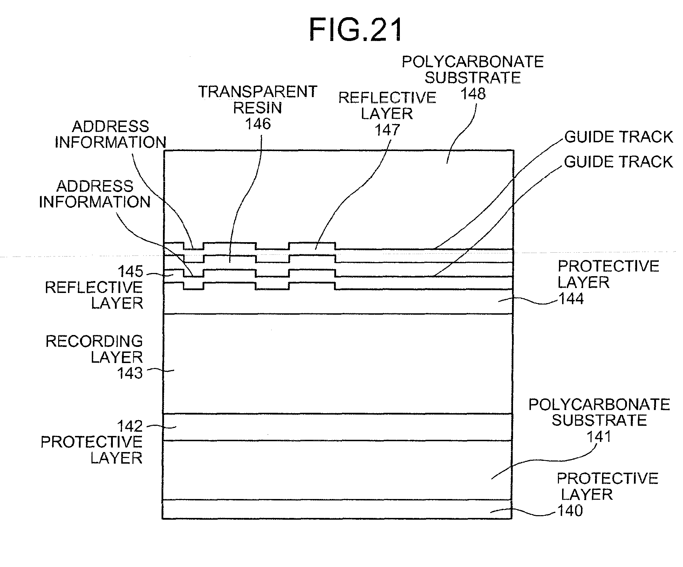

Fig. 21 is a diagram for explaining an optical information recording medium having a plurality of reflective layers that hold profiles of address information and guide tracks. This optical information recording medium includes a protective layer 140, a polycarbonate substrate 141, a protective layer 142, a recording layer 143, a protective layer 144, a reflective layer 145, transparent resin 146, a reflective layer 147, and a polycarbonate substrate 148.

The reflective layer 145 that holds a profile of address information and a guide track is semitransparent. The reflective layer 145 transmits a part of an irradiated laser beam for servo control and reflects a part of the laser beam.

The reflective layer 147 is a layer stacked on the reflective layer 145 with the transparent resin 146 placed between the layers. The reflective layer 147 holds a profile of address information and a guide track in the same manner as the reflective layer 145.

The address information held by the reflective layer 147 is continuous to the address information held by the reflective layer 145. For example, when the reflective layer 145 holds address information from 1 to 50,000, the reflective layer 147 holds address information from 50,001 to 100,000.

The objective lens 126 shown in Fig. 20 is moved back and forth to control a focus position of a laser beam for servo control to be placed on the surface of the reflective layer 145 or the reflective layer 147. Consequently, positions of conjugate focuses of recording signal light and reference light are also changed and it is possible to form the two transmission interference patterns shown in Fig. 16 and 19 in different positions on the recording layer 143 to be apart from each other by the thickness of the transparent resin 146.

In this explanation, the two reflective layers 145 and 147 are provided. However, the number of reflective layers 145 and 147 may be equal to or larger than 2. In this case, it is possible to form transmission interference patterns in the depth direction of the recording layer 13 by the number of the reflective layers 145 and 147.

When a space between the reflective layers 145 and 146 is "k", the number of the reflective layers 145 and 146 is "n", and the length in the depth direction of the transmission interference patterns is "w", thickness "t" at least required of the recording layer 143 is represented as follows assuming that the transmission interference patterns can be multiplexed (can overlap):

$$t = (n - 1)k + w.$$

For example, when "k" is 50 $\mu$m, "n" is 2, and "w" is 100 to 150 $\mu$m, t = 150 $\mu$m to 200 $\mu$m. Thus, it is seen that the recording layer 133 needs to be formed with the thickness equal to or larger than 150 $\mu$m to 200 $\mu$m.

Recording of information on and reproduction of the information from the optical information recording medium described above can be performed using the optical information recording and reproducing apparatus shown in Fig. 20. In the optical information recording and reproducing apparatus, although a wavelength of a laser beam for servo control and a wavelength of a laser beam for forming a transmission interference pattern are the same, because planes of polarization of the laser beams are orthogonal to each other, the laser beams do not interfere with each other.

Laser beams for servo control reflected by the reflective layer 145 and the reflective layer 147 interfere with each other and form an interference pattern. However, because the light intensity of the laser beams is controlled to be equal to or lower than the sensitivity of a recording material used for the recording layer 143 of the optical information recording medium by the light-intensity adjustment element 132 shown in Fig. 20, the interference pattern is not recorded in the recording layer 143.

When the optical information recording medium shown in Fig. 21 is used, because there are a plurality of the reflective layers 145 and 146 that hold the profiles of the address information and the guide tracks, it is unnecessary to move the convergent lens 134 and the magnifying lens 135 shown in Fig. 20 to adjust a conjugate focus in the recording layer 143. Thus, the convergent lens 134 and the magnifying lens 135 may be removed.

As a method of forming a plurality of transmission interference pattern in the depth direction of the recording layer 143, the method of recording information using incident light shown in Fig. 16 and the method of storing information using reflected light shown in Fig. 19 are explained above. However, when the optical information recording medium shown in Fig. 21 is used, it can be said that the method shown in Fig. 16 is preferable. This is because, when information is recorded using a laser beam before reaching the reflective layer 145 or the reflective layer 147, the information recording is not affected by light reflection by the reflective layer 145 and the reflective layer 147.

However, during reproduction of information, the information reproduction is affected by reflected light reflected by the reflective layer 147 in addition to the reflective layer 145 and reproduction noise occurs. Therefore, the reflectance of the reflective layer 145 is set large, the reflectance of the reflective layer 147 is set small, and a ratio of the reflection intensity of the reflective layer 147 to the reflection intensity of the reflective layer 145 is set small to reduce the influence of the reflective layer 147.

To suppress the influence of the recording signal light and the reference light reflected by the reflective layers 145 and 147, a reflective layer may be further provided between the recording layer 143 and the reflective layers 145 and 147.

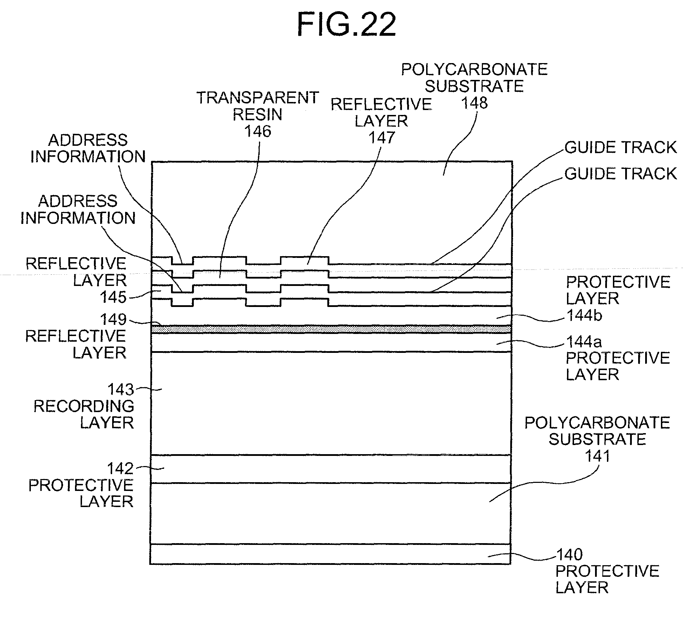

Fig. 22 is a diagram of the structure of an optical information recording medium having a reflective layer 149 that suppresses the influence of the recording signal light and the reference light reflected by the reflective layers 145 and 147. The optical information recording medium shown in Fig. 22 is different from the optical information recording medium shown in Fig. 21 in that a protective layer 144a, a semitransparent flat reflective layer 145, and a protective layer 144b are provided instead of the protective layer 144.

By providing such a reflective layer 149 in the optical information recording medium, the light intensity of the recording signal light and the reference light reflected by the reflective layers 145 and 147 that generate a light beam including address information using the diffraction effect is reduced to intensity lower than the recording sensitivity of the recording material used for the recording layer 143 of the optical information recording medium. Thus, it is possible to substantially reduce the influence of recording noise caused by reflected lights of the recording signal light and the reference light.

During reproduction of information, the reference light reflected by the reflective layer 145 is geometrically separated from the reflective layer 149 by the thickness of the reflective layer 149 and the protective layer 144b. Thus, both the reference lights change to different light beams and occurrence of reproduction noise is controlled.

The reference light reflected by the reflective layer 147 is geometrically separated from the reference light necessary for reproduction reflected by the reflective layer 149 by the thickness of the reflective layer 149, the protective layer 144b, the reflective layer 145, and the transparent resin 146. Thus, both the reference lights change to different light beams and occurrence of reproduction noise is controlled.

In the optical information recording and reproducing apparatus in Fig. 20, the light beam of the P-polarized light for recording and reproduction of information and the light beam of the S-polarized light for servo control are separated using the polarization beam splitter 123 and used. However, the light shielding member of the light shielding plate 70 shown in Fig. 11 may be replaced with a polarization conversion element to generate and use a light beam of P-polarized light and a light beam of S-polarized light.

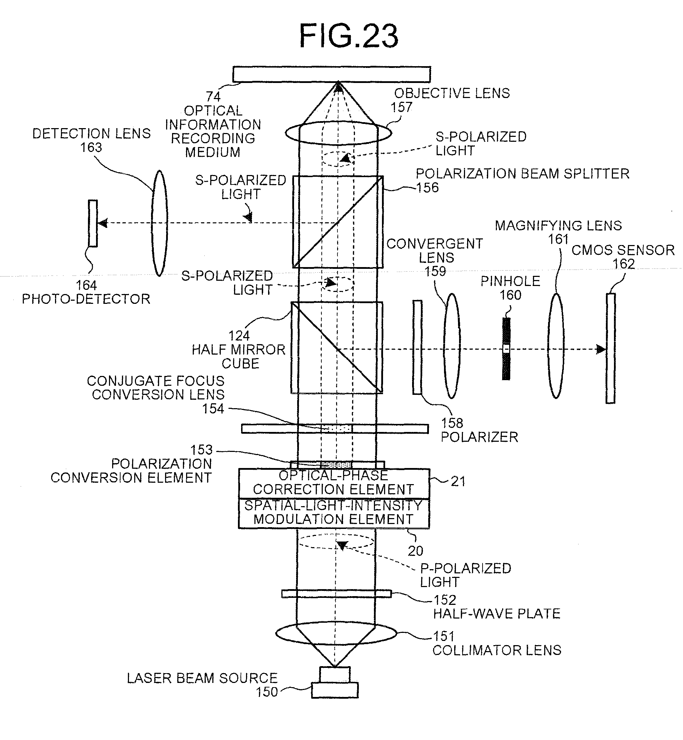

Fig. 23 is a diagram of the structure of an optical system of an optical information recording and reproducing apparatus that generates a light beam of P-polarized light and a light beam of S-polarized light using the polarization conversion element. As shown in Fig. 23, this optical system has a laser beam source 150, a collimator lens 151, a half-wave plate 152, the spatial-light-intensity modulation element 20, the optical-phase correction element 21, a polarization conversion element 153, a conjugate focus conversion lens 154, a half mirror cube 155, a polarization beam splitter 156, an objective lens 157, a polarizer 158, a convergent lens 159, a pinhole 160, a magnifying lens 161, a CMOS sensor 162, a detection lens 163, and a photo-detector 164.

In this optical system, when a light beam is emitted by the laser beam source 150, the light beam is transmitted through the collimator lens 151 and converted into a light beam of P-polarized light by the half-wave plate 152. The light beam of the P-polarized light is made incident on the spatial-light-intensity modulation element 20 and the optical-phase correction element 21 and converted into recording signal light and reference light of the P-polarized light by the spatial-light-intensity modulation element 20 and the optical-phase correction element 21.

The center sections of the spatial-light-intensity modulation element 20 and the optical-phase correction element 21 that overlap in a position where the polarization conversion element 153 is present include only a transparent optical element and do no have a function of modulating light intensity and an optical phase for each of segments.

The polarization conversion element 153 is a polarization conversion element such as a half-wave plate or an optical rotary plate that replaces the light shielding member arranged in the center of the light shielding plate 70 shown in Fig. 11. A polarization direction of a light beam is converted to be orthogonal before and after the light beam is transmitted through the polarization conversion element 153.

A polarization state of a light beam transmitted through a section around the polarization conversion element 153 remains in the P-polarized light and a polarization state of a light beam transmitted through the section of the polarization conversion element 153 is converted into the S-polarized light. The light beam of the S-polarized light is used as a light beam for servo control. Because a polarization direction of the light beam is orthogonal to the light beam of the P-polarized light that forms a transmission interference pattern, there is no mutual action.

The light beam of the P-polarized light is transmitted through the half mirror cube 155, the polarization beam splitter 156, and the objective lens 157 and made incident on the optical information recording medium 74 and forms an interference pattern to thereby record information on the optical information recording medium 74. For example, as the polarization beam splitter 156, a polarization beam splitter in which the transmittance of the light beam of the P-polarized light is 100% and the transmittance and the reflectance of the light beam of the S-polarized light are 50%, respectively, is used.

When the information recorded on the optical information recording medium 74 is reproduced, the light beam of the P-polarized light as reference light is irradiated on the optical information recording medium 74. The light beam reflected by the optical information recording medium 74 is made incident on the CMOS sensor 162 through the objective lens 157, the polarization beam splitter 156, the half mirror cube 155, the polarizer 158, the convergent lens 159, the pinhole 160, and the magnifying lens 161. Thereafter, the light beam made incident on the CMOS sensor 162 is converted into an electric signal and subjected to amplification processing and decode processing, whereby the information stored on the optical information recording medium 74 is reproduced.

On the other hand, the light beam of the S-polarized light is converted into convergent light or divergent light by being transmitted through the conjugate focus conversion lens 154. The conjugate focus conversion lens 154 is explained in detail later.

The light beam of the S-polarized light is transmitted through the half mirror cube 155 and the polarization beam splitter 156 and converges, according to the function of the objective lens 157, in a position on the optical information recording medium 74 different from the focus position of the light beam of the P-polarized light shown in Fig. 14 or 17.

Thereafter, the light beam of the S-polarized light is reflected by the reflective layer 95 of the optical information recording medium 74 shown in Fig. 13, transmitted through the objective lens 157, the polarization beam splitter 156, and the detection lens 163, and converted into an electric signal by the photo-detector 164 that detects address information and servo information such as track error and focus error signals.

The signal obtained by the photo-detector 164 is transmitted to a controller that performs servo control of the objective lens 157. The control of a position of the objective lens 157 is performed based on information of the signal. The light beam can be caused to converge in a predetermined area of the optical information recording medium 74 by such control.

In this way, by using the optical information recording and reproducing apparatus shown in Fig. 23, an optical axis of the light beam of the S-polarized light used for the control of the objective lens 157 and an optical axis of the light beam of the P-polarized light as the recording signal light and the reference light can be set identical. Therefore, it is extremely easy to assemble and adjust the apparatus and it is possible to eliminate a change in the optical axis due to temperature and other environmental changes and remarkably improve stability of the apparatus.

When information is recorded in the optical information recording medium 74, the light intensity of the light beam of the S-polarized light is adjusted to be equal to or lower than the recording sensitivity of the recording layer 93 of the optical information recording medium 74 to prevent an unnecessary interference pattern from being recorded in the recording layer 93. Specifically, a light beam transmitting section of the spatial-light-intensity modulation element 20 having the same shape (e.g., circular) as the polarization conversion element 153, which corresponds to the position of the polarization conversion element 153, is formed as an integrated TFT. The light intensity of the light beam is controlled by the control by the controller 43 with the light beam transmitting section set as a transmitted light intensity adjustment area for adjusting transmission intensity of the light beam.

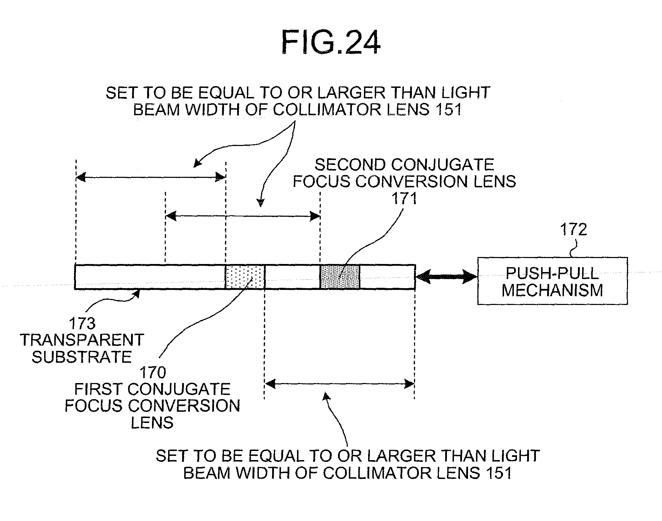

Fig. 24 is a diagram of the structure of the conjugate focus conversion lens 154 shown in Fig. 23. As shown in Fig. 24, The conjugate focus conversion lens 154 includes a plurality of conjugate focus conversion lenses, i.e., in the case of Fig. 24, a first conjugate focus conversion lens 170 and a second conjugate focus conversion lens 171.

In the case of Fig. 24, the first conjugate focus conversion lens 170 and the second conjugate focus conversion lens 171 are embedded in a transparent substrate 173 by integral molding to create the conjugate focus conversion lens 154.

by using the conjugate focus conversion lens 154, it is possible to change a position of a conjugate focus at three stages including a section of the transparent substrate 173 where the first conjugate focus conversion lens 170 and the second conjugate focus conversion lens 171 are not provided.

Specifically, by moving the conjugate focus conversion lens 154 to the left and right with a push-pull mechanism 172 employing an electromagnetic plunger, the section of the transparent substrate 173, the first conjugate focus conversion lens 170, or the second conjugate focus conversion lens 171 is arranged on an optical path on which the light beam of the S-polarized light passes.

The widths of the section of the transparent substrate 173 where the first conjugate focus conversion lens 170 and the second conjugate focus conversion lens 171 are not provided, the first conjugate focus conversion lens 170, a section of the transparent substrate 173 around the first conjugate focus conversion lens 170, and the second conjugate focus conversion lens 171 and a section of the transparent substrate 173 around the second conjugate focus conversion lens 171 are set to be equal to or larger than an light beam width of the collimator lens 151 shown in Fig. 23.

When the objective lens 157 is moved by the servo mechanism according to the movement of the conjugate focus conversion lens 154, the light beam of the S-polarized light is controlled to converge on the reflective layer 95 of the optical information recording medium 74 on which the profile of the address information and the guide track is reflected shown in Fig. 13. The light beam of the P-polarized light is controlled to form three transmission interference patterns in the depth direction of the recording layer 93 of the optical information recording medium 74.

In this way, the conjugate focus conversion lens 154 is extremely effective means when there is one reflective layer 95 on which the profile of the address information and the guide track is reflected and the three transmission interference patterns are formed in the depth direction of the recording layer 93.

On the other hand, in the optical information recording medium shown in Figs. 21 and 22, there are a plurality of the reflective layers 145 and 147 on which the profiles of the address information and the guide tacks are reflected. When a focus position of the light beam of the S-polarized light for servo control is controlled to be on the surface of the reflective layer 145 or the reflective layer 147, a position of the conjugate focus of the light beam of the P-polarized light automatically changes according to the function of the servo mechanism. Thus, basically, the conjugate focus conversion lens 154 is unnecessary.

However, in this case, as in the above case, if the conjugate focus conversion lens 154 is used, it is possible to freely select a position of the conjugate focus of the light beam of the P-polarized light. As a result, it is possible to control a recording position of a transmission interference pattern in the depth direction of the recording layer 143 of the optical information recording medium.

As described above, according to this embodiment, the optical information recording medium 74 includes the recording layer 93 that records information, the reflective layer 95 that reflects a light beam transmitted through the recording layer 93, and the protective layer 94 that is provided between the recording layer 93 and the reflective layer 95 and has the thickness set such that an interference pattern formed by interference between the light beam not yet reflected by the reflective layer 95 and the light beam reflected by the reflective layer 95 is formed in the protective layer 94 itself. Thus, when a light beam that changes to recording signal light or reference light is irradiated, it is possible to effectively control information recording noise caused by interference between the irradiated light beam and the light beam reflected by the reflective layer 95.

According to this embodiment, the recording layer 93 records information through interference of a light beam not yet reflected by the reflective layer 95. Thus, it is possible to constitute the optical information recording medium 74 that forms a transmission interference pattern with the light beam not yet reflected by the reflective layer 95.

According to this embodiment, the recording layer 93 records information through interference of the light beam reflected by the reflective layer 95. Thus, it is possible to constitute the optical information recording medium 74 that forms a transmission interference pattern with the light beam reflected by the reflective layer 95.

According to this embodiment, the light beam for recording information in the recording layer 93 is a light beam, the center section of which is shielded by the light shielding plate 70, and the thickness of the recording layer 93 is set based on a size of an area where the light beam interferes. Thus, it is possible to appropriately set, when a light beam that changes to recording signal light or reference light is irradiated, the thickness of the recording layer 93 to make it possible to effectively control information recording noise caused by interference between the irradiated light beam and the light beam reflected by the reflective layer 95 and surely record information in the recording layer 93.

According to this embodiment, the light beam for recording information in the recording layer 93 is a light beam, the center section of which is shielded by the light shielding plate 70, and the thickness of the protective layer 94 is set based on a size of the shielded center section of the light beam. Thus, it is possible to appropriately set, when a light beam that changes to recording signal light or reference light is irradiated, the thickness of the protective layer 94 to effectively control information recording noise caused by interference between the irradiate light beam and the light beam reflected by the reflective layer 95.

According to this embodiment, the reflective layer 95 has the convexo-concaves in which the address information and the guide track information that are read by irradiation of a light beam and control recording or reproduction of information are recorded. Thus, it is possible to efficiently read control information when the light beam is reflected by the reflective layer 95.

According to this embodiment, the reflective layer 95 reflects a light beam in a direction in which the light beam does not overlap a position of an interference pattern formed in the recording layer 93 by interference of the light beam not yet reflected by the reflective layer 95. Thus, when a light beam is irradiated on the optical information recording medium 74 that forms a transmission interference pattern with the light beam not yet reflected by the reflective layer 95, it is possible to effectively control information recording noise caused by interference between the irradiated light beam and the light beam reflected by the reflective layer 95.

According to this embodiment, the reflective layer 95 reflects a light beam in a direction in which the light beam not yet reflected by the reflective layer 95 and a position of an interference pattern formed in the recording layer 93 by interference of the light beam reflected by the reflective layer 95 do not overlap each other and forms the interference pattern in the recording layer 93. Thus, when a light beam is irradiated on the optical information recording medium 74 that forms a transmission interference pattern with the light beam reflected by the reflective layer 95, it is possible to effectively control information recording noise caused by interference between the irradiated light beam and the light beam reflected by the reflective layer 95.

According to this embodiment, the reflective layers 145 and 147 having the convexo-concaves in which control information is recorded are formed of a semitransparent material and, in the recording layer 143, a plurality of interference patterns are formed apart from one another by the distance between the reflective layers 145 and 147. Thus, the apparatus that records information on and reproduces the information from the optical information recording medium can easily set a focus in recording positions of the interference patterns in the reflective layers 145 and 147 and the recording layer 143 using the servo mechanism and can easily perform recording and reproduction of the information. Further, it is possible to improve a recording density of the information in the recording layer 143.

According to this embodiment, the space between reflection surfaces of the two reflective layers 145 and 147 on the outer side among the reflective layers 145 and 147 is set to be equal to or smaller than the thickness of the recording layer 143. Thus, the apparatus that records information on and reproduces the information from the optical information recording medium can appropriately record an interference pattern in the recording layer 143 and appropriately reproduce the interference pattern recorded in the recording layer 143 using the servo mechanism.

According to this embodiment, the recording layer 143 includes a single layer and is a predetermined distance apart from the respective reflective layers 145 and 147. Thus, it is possible to appropriately record an interference pattern in the recording layer 143 and appropriately reproduce the interference pattern recorded in the recording layer 143.

According to this embodiment, the refractive index of the protective layer 93 and the refractive index of the recording layer 92 are substantially identical. Thus, it is possible to control reflection of light beams on an interface between the protective layer 93 and the recording layer 92 and prevent unnecessary interference of light beans.

The reflective layer 149 that transmits a part of a light beam and reflects a part of the light beam is further provided between the reflective layers 145 and 147 having the convexo-concaves in which the control information is recorded and the recording layer 143. Thus, the light intensity of a light beam reflected by the reflective layers 145 and 147 having the convexo-concaves in which the control information is recorded is reduced and it is possible to reduce recording noise caused by the influence of the light beam.

In this embodiment, the transmittances of the spatial modulation elements 10 and 80 are changed to fix the light intensity of reference light. However, by changing a role of one or more segments decided in advance from a role of forming recording signal light to a role of generating reference light having various light intensities, it is possible to give a password function to the reference light and improve reliability for information volumetrically recorded in the recording medium 50.

This is because, since optical information volumetrically recorded in the recording media 50 and 74 cannot be read out if reference light for reading out the optical information is not identical with reference light used in volumetrically recording the optical information in the recording media 50 and 74, a third party who cannot discriminate positions of segments, a role of which is changed, among a plurality of segments present in the recording media 50 and 74 cannot read out the optical information recorded in the recording media 50 and 74.

The embodiment of the present invention has been explained. However, other than the embodiment described above, the present invention can be carries out in various different embodiments within the scope of the technical idea described in claims.

It is also possible to manually perform all or a part of the processing explained as automatically performed among the respective kinds of processing explained in the embodiment or it is possible to automatically perform, with a publicly known method, all or a part of the processing explained as manually performed.

Besides, the information including the processing procedures, the control procedures, the specific names, and the various data and parameters described in this document and shown in the drawings can be arbitrarily changed unless specifically noted otherwise.

The respective components of the respective devices shown in the figures are functionally conceptual and do not always have to be physically constituted as shown in the figures. In other words, specific forms of distribution and integration of the respective devices are not limited to those shown in the figures. It is possible to functionally or physically distribute and integrate all or a part of the devices in arbitrary units according to various loads, states of use, and the like.

INDUSTRIAL APPLICABILITY

As described above, the optical information recording medium according to the present invention is useful as an optical information recording medium that needs to effectively control, when recording signal light and reference light are irradiated, information recording noise caused by interference between the irradiated recording signal light or reference light and the recording signal light or the reference light reflected by a reflective layer.

**Claims**

1.  An optical information recording medium on which information is recorded by interference of light beams, the optical information recording medium comprising:

    a recording layer in which the information is recorded;
    a reflective layer that reflects a light beam transmitted through the recording layer; and
    a protective layer that is provided between the recording layer and the reflective layer and has a thickness set such that an interference pattern formed by interference between the light beam not yet reflected by the reflective layer and the light beam reflected by the reflective layer is formed in the protective layer.

2.  The optical information recording medium according to claim 1, wherein the information is recorded in the recording layer by interference of the light beams not yet reflected by the reflective layer.

3.  The optical information recording medium according to claim 1, wherein the information is recorded in the recording layer by the light beams reflected by the reflective layer.

4.  The optical information recording medium according to claim 2 or 3, wherein a light beam for recording information in the recording layer is a light beam whose center section is shielded, and the recording layer has a thickness set based on a size of an area in which the light beams interfere.

5.  The optical information recording medium according to claim 2 or 3, wherein a light beam for recording information in the recording layer is a light beam whose center section is shielded, and the protective layer has a thickness set based on a size of the center section shielding the light beam.

6.  The optical information recording medium according to claim 1, wherein the reflective layer has convexo-concaves in which control information that is read by irradiation of a light beam and controls recording or reproduction of information is recorded.

7.  The optical information recording medium according to claim 2, wherein the reflective layer reflects a light beam in a direction in which the light beams does not overlap a position of an interference pattern formed in the recording layer by the interference of the light beams not yet reflected by the reflective layer.

8.  The optical information recording medium according to claim 3, wherein the reflective layer reflects the light beam in a direction in which the light beams not yet reflected by the reflective layer does not overlap a position of an interference pattern formed in the recording layer by the interference of the light beams reflected by the reflective layer, to cause the light beams to form an interference pattern in the recording layer.

9.  The optical information recording medium according to claim 6, wherein the reflective layer having the convexo-concaves in which the control information is recorded includes a plurality of reflective layers made of a semitransparent material, and a plurality of interference patterns are formed in the recording layer with a distance between the reflective layers being apart from one another.

10. The optical information recording medium according to claim 9, wherein a space between reflection surfaces of the outmost two reflective layers among the plurality of reflective layers is equal to or smaller than a thickness of the recording layer.

11. The optical information recording medium according to claim 9, wherein the recording layer includes a single layer and is a predetermined space apart from the respective reflective layers.

12. The optical information recording medium according to claim 1, wherein a refractive index of the protective layer and a refractive index of the recording layer are substantially the same.

13. The optical information recording medium according to claim 6, further comprising a reflective layer provided between the reflective layer having the convexo-concaves in which the control information is recorded and the recording layer, the reflective layer transmitting a part of the light beam and reflecting a part of the light beam.

# FIG.1

Y AXIS

11
SEGMENT

13
LENS
APERTURE

12
SEGMENT
BOUNDARY

14
ON SEGMENT

X AXIS

10
SPATIAL LIGHT
MODULATION
ELEMENT

15
OFF SEGMENT

# FIG.2

LIGHT INTENSITY

(ALTERNATELY APPLY
VOLTAGE A AND VOLTAGE B)

RECORDING
SIGNAL LIGHT
LEVEL
(APPLIED
VOLTAGE A)

REFERENCE
LIGHT LEVEL
(APPLIED
VOLTAGE B)

WHERE, B>A

DISTANCE IN X
AXIS DIRECTION
ON CERTAIN Y
AXIS

... SEGMENT SEGMENT  SEGMENT ...

# FIG.3

DIFFRACTIVE
INTERFERENCE
PATTERN

OBJECTIVE LENS

| a | b | c | d | e | f | g | h |

EQUIVALENT

| q | r | s |
| p |

$p=a+1/2b+c+1/2d+e+f+1/2g+h$

$q=1/2b \quad r=1/2d \quad s=1/2g$

EP 1 898 275 A1

# FIG.4-1

APPLY VOLTAGE B TO ALL
SEGMENTS

BOUNDARY
REFERENCE LIGHT LEVEL

REFERENCE LIGHT
LEVEL

LIGHT INTENSITY ZERO
LEVEL

BOUNDARY OF
SEGMENTS

UNIT
SEGMENT

ALTERNATELY
APPLY VOLTAGE A AND
VOLTAGE B (B>A)

RECORDING SIGNAL
LIGHT LEVEL

BOUNDARY
REFERENCE LIGHT LEVEL

REFERENCE LIGHT
LEVEL

LIGHT INTENSITY ZERO
LEVEL

# FIG.4-2

APPLY VOLTAGE B TO ALL
SEGMENTS

REFERENCE
LIGHT LEVEL

LIGHT INTENSITY
ZERO LEVEL

BOUNDARY OF
SEGMENTS

UNIT
SEGMENT

ALTERNATELY APPLY
VOLTAGE A AND
VOLTAGE B (B>A)

RECORDING
SIGNAL LIGHT LEVEL

REFERENCE
LIGHT LEVEL

LIGHT INTENSITY
ZERO LEVEL

# FIG.4-3

# FIG.5

RECORDING SIGNAL LIGHT/
REFERENCE LIGHT

SPATIAL LIGHT
MODULATION
ELEMENT
10

OPTICAL-PHASE
CORRECTION ELEMENT
21

20
SPATIAL-LIGHT-INTENSITY
MODULATION ELEMENT
(WITH PHASE CHANGE)

LIGHT BEAM

# FIG.6

OPTICAL-PHASE
CORRECTION ELEMENT
21

TFT COUNTER
ELECTRODE
33a

POLARIZING PLATE
34

33
GLASS SUBSTRATE

32
LIQUID CRYSTAL

31
POLARIZING PLATE

31a
MATRIX-LIKE TFT SEGMENT

30
POLARIZING
PLATE

# FIG.7-1

POLARIZING PLATE
34

GLASS SUBSTRATE
33

GLASS SUBSTRATE
31

35
LIQUID CRYSTAL
MOLECULES

30
POLARIZING PLATE

# FIG.7-2

POLARIZING PLATE
34

GLASS SUBSTRATE
33

GLASS SUBSTRATE
31

35
LIQUID CRYSTAL
MOLECULES

30
POLARIZING
PLATE

# FIG.8

EP 1 898 275 A1

FIG.9

32

# FIG.10-1

LASER BEAM
FOR CONTROL

PROTECTIVE
LAYER
66

REFLECTIVE
LAYER
65

RECORDING
LAYER
63

PROTECTIVE
LAYER
62

60
PROTECTIVE
LAYER

POLYCARBONATE
SUBSTRATE
68

67
REFLECTIVE
LAYER

64
PROTECTIVE LAYER

61
POLYCARBONATE
SUBSTRATE

REFLECTED RECORDING
SIGNAL LIGHT/
REFERENCE LIGHT

49
OBJECTIVE LENS

# FIG.10-2

LASER BEAM
FOR CONTROL

PROTECTIVE
LAYER
66

REFLECTIVE
LAYER
65

RECORDING
LAYER
63

PROTECTIVE
LAYER
62

60
PROTECTIVE
LAYER

POLYCARBONATE
SUBSTRATE
68

67
REFLECTIVE
LAYER

64
PROTECTIVE
LAYER

61
POLYCARBONATE
SUBSTRATE

INCIDENT RECORDING
SIGNAL LIGHT/
REFERENCE LIGHT

49
OBJECTIVE LENS

# FIG.11

OPTICAL INFORMATION RECORDING MEDIUM
74
OBJECTIVE LENS 49
CONVERGENT LENS 71
MAGNIFYING LENS 73
PINHOLE 72
CMOS SENSOR 56

HALF MIRROR CUBE 48

AMPLIFIER 57

DECODER 58

HALF MIRROR CUBE 53

DICHROIC CUBE 47

LIGHT SHIELDING PLATE 70

REPRODUCTION AND OUTPUT DEVICE 59

51 LONG-WAVELENGTH LASER BEAM SOURCE

52 COLLIMATOR LENS

OPTICAL-PHASE CORRECTION ELEMENT 21
SPATIAL-LIGHT-INTENSITY MODULATION ELEMENT 20

54 DETECTION LENS

55 SERVO ADDRESS SIGNAL DETECTOR

46 COLLIMATOR LENS

45 SHORT-WAVELENGTH LASER BEAM SOURCE

LASER DRIVING DEVICE 44

RECORDING INFORMATION (IMAGE/MUSIC/DATA)

ENCODER 40

RECORDING SIGNAL GENERATOR (PAGE DATA) 41

SPATIAL-LIGHT-MODULATION-ELEMENT DRIVING DEVICE (SYNCHRONOUS DRIVING, APPLIED VOLTAGE INDEPENDENT ADJUSTMENT FUNCTION) 42

CONTROLLER 43

EP 1 898 275 A1

# FIG.12

SEGMENT
81
86
LIGHT SHIELDING FILM
83
LENS APERTURE
82
SEGMENT BOUNDARY

UNMODULATED
AREA
87

84
ON SEGMENT

80
SPATIAL LIGHT
MODULATION
ELEMENT

85
OFF SEGMENT

# FIG.13

ADDRESS
INFORMATION

GUIDE TRACK

POLYCARBONATE
SUBSTRATE
96

REFLECTIVE
LAYER
95

94
PROTECTIVE
LAYER

RECORDING
LAYER
93

POLYCARBONATE
SUBSTRATE
91

92
PROTECTIVE
LAYER

90
PROTECTIVE
LAYER

FIG.14

# FIG.15

PROTECTIVE LAYER 94

REFLECTIVE LAYER 95

P1

P2

RECORDING LAYER 93

92 PROTECTIVE LAYER

OBJECTIVE LENS 49 SIDE

TRANSMISSION INTERFERENCE PATTERN

EP 1 898 275 A1

FIG.16

PROTECTIVE LAYER 94

REFLECTIVE LAYER 95

P1

P2

RECORDING LAYER 93

TRANSMISSION INTERFERENCE PATTERN

TRANSMISSION INTERFERENCE PATTERN

92 PROTECTIVE LAYER

OBJECTIVE LENS 49 SIDE

EP 1 898 275 A1

# FIG.17

REFLECTIVE LAYER 95

OPTICAL INFORMATION RECORDING MEDIUM 74

P3    P4

94 PROTECTIVE LAYER

93 RECORDING LAYER

CONJUGATE FOCUS

110a INCIDENT LIGHT    111a INCIDENT LIGHT

111b REFLECTED LIGHT    110b REFLECTED LIGHT

49 OBJECTIVE LENS

70 LIGHT SHIELDING PLATE

EP 1 898 275 A1

# FIG.18

EP 1 898 275 A1

FIG.19

PROTECTIVE LAYER 94

REFLECTIVE LAYER 95

P3

P4

RECORDING LAYER 93

TRANSMISSION INTERFERENCE PATTERN

TRANSMISSION INTERFERENCE PATTERN

92 PROTECTIVE LAYER

OBJECTIVE LENS 49 SIDE

EP 1 898 275 A1

FIG.20

EP 1 898 275 A1

# FIG.21

POLYCARBONATE
SUBSTRATE
148

TRANSPARENT    REFLECTIVE
RESIN          LAYER
146            147

ADDRESS
INFORMATION

GUIDE TRACK
GUIDE TRACK

ADDRESS
INFORMATION

145
REFLECTIVE
LAYER

PROTECTIVE
LAYER
144

RECORDING
LAYER
143

142
PROTECTIVE
LAYER

POLYCARBONATE
SUBSTRATE
141

PROTECTIVE
LAYER
140

# FIG.22

# FIG.23

74
OPTICAL
INFORMATION
RECORDING
MEDIUM

OBJECTIVE LENS
157

DETECTION LENS
163

S-POLARIZED
LIGHT

S-POLARIZED
LIGHT

POLARIZATION BEAM SPLITTER
156

MAGNIFYING LENS
161

CONVERGENT
LENS
159

CMOS SENSOR
162

PINHOLE
160

164
PHOTO-DETECTOR

S-POLARIZED
LIGHT

124
HALF MIRROR
CUBE

CONJUGATE FOCUS
CONVERSION LENS
154

158
POLARIZER

153
POLARIZATION
CONVERSION ELEMENT

OPTICAL-PHASE
CORRECTION ELEMENT

21

SPATIAL-LIGHT-INTENSITY
MODULATION ELEMENT

20

P-POLARIZED
LIGHT

152
HALF-WAVE PLATE

151
COLLIMATOR LENS

LASER BEAM SOURCE
150

# FIG.24

SET TO BE EQUAL TO OR LARGER THAN LIGHT
BEAM WIDTH OF COLLIMATOR LENS 151

SECOND CONJUGATE
FOCUS CONVERSION LENS
171

172

PUSH-PULL
MECHANISM

173
TRANSPARENT
SUBSTRATE

170
FIRST CONJUGATE
FOCUS CONVERSION
LENS

SET TO BE EQUAL TO OR LARGER THAN LIGHT
BEAM WIDTH OF COLLIMATOR LENS 151

## INTERNATIONAL SEARCH REPORT

| | International application No. |
|---|---|
| | PCT/JP2005/011755 |

A.　CLASSIFICATION OF SUBJECT MATTER
　　Int.Cl⁷　G03H1/02, G11B7/0065, 7/135

According to International Patent Classification (IPC) or to both national classification and IPC

B.　FIELDS SEARCHED

Minimum documentation searched (classification system followed by classification symbols)
　　Int.Cl⁷　G03H1/02, G11B7/0065, 7/135

Documentation searched other than minimum documentation to the extent that such documents are included in the fields searched
　　Jitsuyo Shinan Koho　　　　　1922-1996　Jitsuyo Shinan Toroku Koho　1996-2005
　　Kokai Jitsuyo Shinan Koho　　1971-2005　Toroku Jitsuyo Shinan Koho　1994-2005

Electronic data base consulted during the international search (name of data base and, where practicable, search terms used)

C.　DOCUMENTS CONSIDERED TO BE RELEVANT

| Category* | Citation of document, with indication, where appropriate, of the relevant passages | Relevant to claim No. |
|---|---|---|
| A | JP 11-311938 A　(Hideyoshi HORIGOME),<br>09 November, 1999 (09.11.99),<br>Full text; all drawings<br>& US 2002/114027 A1　　& EP 1065658 A1<br>& WO 1999/044195 A1 | 1-13 |
| A | JP 2004-361928 A　(Optware Corp.),<br>24 December, 2004 (24.12.04),<br>Full text; all drawings<br>& US 2005/78592 A1 | 1-13 |
| A | JP 2004-335044 A　(Optware Corp.),<br>25 November, 2004 (25.11.04),<br>Full text; all drawings<br>(Family: none) | 1-13 |

☒　Further documents are listed in the continuation of Box C.　　☐　See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　26 August, 2005 (26.08.05) | Date of mailing of the international search report<br>　13 September, 2005 (13.09.05) |
|---|---|
| Name and mailing address of the ISA/<br>　Japanese Patent Office | Authorized officer |
| Facsimile No. | Telephone No. |

Form PCT/ISA/210 (second sheet) (January 2004)

**EP 1 898 275 A1**

<table>
<tr><th colspan="2">INTERNATIONAL SEARCH REPORT</th><th>International application No.</th></tr>
<tr><td colspan="2"></td><td>PCT/JP2005/011755</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-107114 A  (Toshiba Corp.),<br>21 April, 2005 (21.04.05),<br>Full text; all drawings<br>& US 2005/88947 A1 | 1-13 |
| A | JP 11-237829 A  (Fuji Xerox Co., Ltd.),<br>31 August, 1999 (31.08.99),<br>Full text; all drawings<br>(Family: none) | 1-13 |
| A | JP 2004-311001 A  (Fuji Xerox Co., Ltd.),<br>04 November, 2004 (04.11.04),<br>Full text; all drawings<br>& US 2004/190094 A1 | 1-13 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11237829 A
- JP 2004311001 A
- JP 2004361928 A